(19) Europäisches Patentamt / European Patent Office / Office européen des brevets

(11) **EP 2 047 298 B1**

(12) **EUROPÄISCHE PATENTSCHRIFT**

(45) Veröffentlichungstag und Bekanntmachung des Hinweises auf die Patenterteilung:
**11.12.2013  Patentblatt 2013/50**

(21) Anmeldenummer: **07730217.2**

(22) Anmeldetag: **18.06.2007**

(51) Int Cl.:
*G01T 1/36* (2006.01)   *G01V 5/00* (2006.01)
*G01T 1/202* (2006.01)

(86) Internationale Anmeldenummer:
**PCT/EP2007/056005**

(87) Internationale Veröffentlichungsnummer:
**WO 2008/009526 (24.01.2008 Gazette 2008/04)**

(54) **VERFAHREN ZUM BESTIMMEN EINER MATERIALZUSAMMENSETZUNG EINER MATERIALPROBE**

METHOD FOR DETERMINING THE MATERIAL COMPOSITION OF A MATERIAL SAMPLE

PROCÉDÉ POUR DÉTERMINER LA COMPOSITION D'UN ÉCHANTILLON DE MATÉRIAU

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **20.07.2006  DE 102006033662**

(43) Veröffentlichungstag der Anmeldung:
**15.04.2009  Patentblatt 2009/16**

(73) Patentinhaber: **GSI Helmholtzzentrum für Schwerionenforschung GmbH**
**64291 Darmstadt (DE)**

(72) Erfinder:
• **KRAFT, Gerhard**
 **64291 Darmstadt (DE)**
• **ENGHARDT, Wolfgang**
 **01454 Radeberg (DE)**
• **WÜRSCHIG, Thomas**
 **01237 Dresden (DE)**

(74) Vertreter: **Rück, Dorothee Maria**
**GSI**
**Helmholtzzentrum für Schwerionenforschung GmbH**
**Planckstraße 1**
**D-64291 Darmstadt (DE)**

(56) Entgegenhaltungen:
**EP-A1- 0 358 965      EP-A1- 1 956 392**
**GB-A- 2 071 312      US-A- 5 109 227**
**US-A1- 2005 195 931**

**Beschreibung**

Die vorliegende Erfindung betrifft ein Verfahren zum Bestimmen einer Materialzusammensetzung einer Materialprobe, welche Strahlung abgibt, eine zur Durchführung des Verfahrens geeignete Detektoranordnung, sowie die Verwendung dieser Detektoranordnung.

Heutzutage wird Strahlung verschiedenster Art, wie beispielsweise Alpha-, Beta-, Gammastrahlung oder Teilchen, wie Elektronen, Neutronen, Ionen oder Atomkerne zur Untersuchung von Materialproben verwendet. Entsprechende Untersuchungen mit Strahlung finden beispielsweise Anwendung bei der Lokalisierung und Identifizierung von Gefahrstoffen, wie zum Beispiel verborgenen Sprengstoffen, aber auch in der Medizintechnik in Verbindung mit bildgebenden Verfahren, in der Strahlungsmesstechnik oder in der Forschung zu Strukturuntersuchungen von Materialien. Dabei sind insbesondere Strahlungsdetektoren, die es erlauben, die Einfallsrichtung oder den Entstehungsort der zu detektierenden Strahlung festzustellen und Auswerteverfahren zur Identifizierung der in der jeweiligen Strahlungsquelle vorliegenden Materialien notwendig.

Bei bislang eingesetzten Verfahren erfolgte beispielsweise zunächst eine Kollimation von einfallender, zu detektierender Strahlung durch Loch- oder Lamellenkollimatoren vor dem eigentlichen Detektormaterial. Gewöhnlich ist ein entsprechender Lochkollimator aus einer Platte eines Materials mit hoher Ordnungszahl, wie beispielsweise Blei, Wolfram, Eisen oder Messing aufgebaut, die mit einer Vielzahl von Bohrungen mit kleinem Durchmesser versehen ist. So können zum Beispiel nur die  den entsprechenden Kollimator durchlaufende Gammastrahlen anschließend durch einen Detektor erkannt werden.

Dabei ist insbesondere bei hohen Strahlungsenergien eine geringe Sensitivität des Detektors von Nachteil, da bei der Auswertung nur die zu den Achsen der Bohrungen parallel oder unter einem kleinen Öffnungswinkel einfallenden Gammastrahlen verwendet werden sollen. Deshalb muss die Wandstärke zwischen den Kollimatorbohrungen in Abhängigkeit von Kollimatormaterial, Kollimatordicke, Lochdurchmesser und Photonenenergie gewählt werden. Insbesondere bei Photonen mit Energien von über 200 keV kann die erforderliche Wandstärke zwischen den Kollimatorbohrungen die Durchmesser der Bohrungen übersteigen. Dann wird die Transmission, d.h. die Querschnittsfläche aller Kollimatorbohrungen im Verhältnis zu der gesamten Stirnfläche (Vorderseite) des jeweiligen Detektors, gering: Die absorbierende Querschnittsfläche übersteigt dann sogar die durchlässige Fläche des Kollimators. Je höher die Energie der zu detektierenden Teilchen oder Strahlung ist, desto ungünstiger wird die Transmission und umso kleiner die Ansprechwahrscheinlichkeit des jeweiligen Detektors. Dies gilt insbesondere für höher energetische Gammastrahlung. Neben den vorgenannten kollimatorbasierten Detektoren sind auch kollimationslose richtungsdetektierende Detektionsverfahren bekannt: die Compton-Kamera oder die Positronenkamera bei der Positron-Emissions-Tomographie (PET).

Bei dem Prinzip der Compton-Kamera wird anstelle der vorgenannten mechanischen Kollimation eine elektronische Kollimation zur Bestimmung der Richtung von auf das entsprechende Detektorsystem einfallender Strahlung durchgeführt. Ein in eine Compton-Kamera einfallendes Strahlungs-Photon durchläuft dabei zunächst einen ersten Streudetektor, in dem eine Compton-Streuung erfolgt. Wenn der Streudetektor granular ausgeführt ist, wird der Ort der Wechselwirkung erkannt. In einem zweiten, beabständeten, Absorptionsdetektor wird das gestreute Photon vollständig gestoppt, wobei der Ort und die Energie registriert werden können. Wenn die beiden Streuereignisse im Streudetektor und Absorptionsdetektor koinzident nachgewiesen werden, lässt sich der Ort der Strahlungsquelle, welche das Photon abgegeben hat, auf einen Kegelmantel mit der Spitze am Ort des Streudetektors rekonstruieren. Mittels geeigneter tomografischer Rekonstruktionsalgorithmen kann der Ort der Strahlungsquelle bestimmt werden. Dieses Prinzip wird vor allem in der Astrophysik zur Messung von Gammastrahlungsquellen mit Photonenenergien bis zu 30 MeV eingesetzt.

Ein Nachteil besteht darin, dass der Streudetektor sehr dünn sein muss, damit höchstens eine Compton-Wechselwirkung in ihm stattfindet. Dadurch sinkt jedoch grundsätzlich die Wechselwirkungswahrscheinlichkeit in dem Detektor. Ferner muss eine vollständige Energiedeposition der Photonenenergie in dem Absorptionsdetektor gewährleistet sein, was in realen Detektorsystemen immer nur für einen Teil der auftreffenden Photonen erreicht wird. Dadurch wird die Effizienz der Compton-Kamera gesenkt.

Ein besonderes Einsatzgebiet von richtungsauflösenden Detektoren stellt das Auffinden von Sprengstoffen, beispielsweise Landminen in freiem Gelände oder versteckten Sprengstoffen in Reisegepäck oder Frachtgütern dar.

Sprengstoffe weisen im Allgemeinen eine hohe Konzentration von Stickstoffverbindungen auf. Die Erkennung dieser Stickstoffanhäufungen muss meist im Umfeld anderer leichterer Atome, wie beispielsweise organischer Verbindungen und Plastik, Sand oder Erde stattfinden, die im Falle von Landminen Teil des Erdbodens sind oder die den Hauptbestandteil des zu untersuchenden  Behälters bilden. Diese Materialien weisen vorwiegend leichte Elemente, wie Kohlenstoff (C), Stickstoff (N), Sauerstoff (O), Fluor (F), Silizium, (Si), Magnesium (Mg) usw. auf, welche bei Neutronenanregung (Aktivierung mit Neutronen) hochenergetische Gamma-Quanten bzw. Gammastrahlung emittieren. Üblicherweise werden zum Beispiel an Flughäfen Transmissionsröntgengeräte zur Gepäckkontrolle eingesetzt. Dabei wird jedoch kein elementspezifisches Signal ermittelt, sondern Sprengsätze nur aufgrund ihrer Form im Durchleuchtungsbild detektiert.

Ein Verfahren zum Bestimmen der Materialzusammensetzung einer Strahlung abstrahlenden Materialprobe ist auch aus US20050195931 bekannt. Ein Testobjekt wird mit schnellen Neutronen bestrahlt und emittiert prompte Gammastrahlung. Ein Spektrum wird aufgenommen und die Höhe der Peaks bestimmt. Durch Verwendung eines Dalitz Dreiecks kann auf die Materialzusammensetzung geschlossen werden.

Für die Detektion von Landminen im Erdboden wurden Röntgenrückstreudetektoren und Verfahren, die Neutronen einsetzen, vorgeschlagen, wie beispielsweise in "Detection of buried landmines and hidden explosives using neutron, X-ray and gamma-ray probes", G. Nebbia und J. Gerl in europhysics news, July/August 2005, Seite 119 ff. Dabei werden zum Beispiel rückgestreute Neutronen oder Gamma-Quanten aus dem Neutroneneinfang mit Szintillationszählern gemessen. Dabei sind in der Regel großvolumige dicht über dem Boden zu bewegende Detektoranordnungen notwendig. Die Richtung der beispielsweise durch Neutronenaktivierung erzeugten Gamma-Quelle bezüglich des Detektionssystems über dem Erdboden ist dabei nicht zu ermitteln.

Ein weiteres Problem besteht darin, von einem gemessenen Intensitätsspektrum einzelne Emissionslinien zu identifizieren, die beispielsweise für Stickstoff oder andere Material- oder Elementekompositionen charakteristisch sind, um Aussagen über die Zusammensetzung der jeweiligen Materialproben zu machen und das Vorliegen von Sprengstoff zu detektieren. Dies erfordert nachteilig eine energieauflösende Spektroskopie mit hoher Energieauflösung. Dies bedingt einen großen apparativen Aufwand und führt zu einer geringeren Ansprechwahrscheinlichkeit des entsprechenden Detektors.

Es ist daher eine Aufgabe der vorliegenden Erfindung, aus einer detektierten Strahlung das Vorliegen vorgegebener Materialien zu bestimmen. Es ist eine weitere Aufgabe der Erfindung, eine Detektoranordnung zu schaffen, die eine verbesserte Detektion und Auswertung von Strahlung ermöglicht.

Diese Aufgabe wird durch ein Verfahren zum Bestimmen der Materialzusammensetzung einer Strahlung abstrahlenden Materialprobe mit den im Patentanspruch 1 angegebenen Verfahrensschritten gelöst. Ferner löst eine Detektoranordnung mit den Merkmalen des Patentanspruchs 11 die Aufgabe.

Demgemäß sieht das Verfahren die folgenden Verfahrensschritte vor:

a) Aufnehmen eines Spektrums der in einem Detektormaterial durch die Strahlung deponierten Energie mit einem das Detektormaterial aufweisenden Detektorelement;

b) Berechnung einer in einem ersten Energiebereich deponierten ersten Energie durch Integration der im ersten Energiebereich auftretenden Energieintensitäten, einer in einem zweiten Energiebereich deponierten zweiten Energie durch Integration der im zweiten Energiebereich auftretenden Energieintensitäten, und einer in einem dritten Energiebereich deponierten dritten Energie durch Integration der im dritten Energiebereich auftretenden Energieintensitäten, wobei die Energiebereiche unmittelbar aneinander angrenzen;

c) Zuordnen eines ersten Farbparameters zu der ersten deponierten Energie, eines zweiten Farbparameters zu der zweiten deponierten Energie und eines dritten Farbparameters zu der dritten deponierten Energie;

d) Vektorielles vergleichen sämtlicher derart zugeordneten Farbparameter mit vorgegebenen Werten für diese Farbparameter, wobei die vorgegebenen Werte typischen Farbparametern einer vorbestimmten Materialzusammensetzung entsprechen; wobei

e) in Abhängigkeit von den Farbparametern über das Vorliegen einer gesuchten Materialzusammensetzung in der Materialprobe entschieden wird.

Erfindungsgemäß werden den drei deponierten Energien ein erster, zweiter und dritter Farbparameter zugeordnet. Analog dem menschlichen Farbsehen wird somit die Intensität der deponierten Energie für zumindest drei Energiebereiche, bzw. Wellenlängen- oder Frequenzbereiche verwendet. Die erste deponierte Energie bestimmt den ersten Farbparameter, die zweite deponierte Energie den zweiten Farbparameter, und die dritte deponierte Energie bestimmt den dritten Farbparameter.

Erfindungsgemäß wird in Abhängigkeit von den Farbparametern über das Vorliegen einer gesuchten Materialzusammensetzung in der Materialprobe entschieden. Dabei ist beispielsweise einem gesuchten Material mindestens eine vorbestimmte Kombination von Farbparametern zugeordnet.

Zum Beispiel emittiert das aktivierte Material bei einer Aktivierung mit Neutronen in der Regel charakteristische Spektrallinien, die üblicherweise eine hohe Energieauflösung des verwendeten Detektors bedingen um sie zu erkennen. Erfindungsgemäß wird das Gamma-Emissionsspektrum eines bekannten zu erkennenden Materials in die drei Energiebereiche eingeteilt und entsprechende Referenz-Farbparameter vorbestimmt. Durch Vergleich der ermittelten Kombination mit diesen vorbestimmten Farbparametern ist es dann möglich, aus den erfindungsgemäß bestimmten Farbparametern des Spektrums der deponierten Energie in dem Detektorelement das gesuchte Material zu identifizieren.

Dabei können beispielsweise in einem dreidimensionalen Farbparameterraum Volumen festgelegt werden.

Fällt ein erfindungsgemäß bestimmter Vektor aus den drei Farbparametern in ein solches Volumen, gilt das gesuchte Material als erkannt. Bevorzugt wird ein Abstand zwischen den beiden Energiebereichen oder der Schwerpunkt zwischen den beiden Energiebereichen in Abhängigkeit von einer Energieauflösung des Detektorelements gewählt.

In bevorzugten Ausführungsformen des Verfahrens werden weitere Energiebereiche und Farbparameter verwendet, was zu einem höherdimensionalen Farbparameterraum führt.

In einer Weiterbildung des erfindungsgemäßen Verfahrens ist ferner ein Schritt vorgesehen, bei dem Neutronen auf eine Materialprobe zu deren Aktivierung eingestrahlt werden.

In einer vorteilhaften Weiterbildung des erfindungsgemäßen Verfahrens wird ein Detektorelement verwendet, wobei das Detektorelement eine Vorderseite und eine Rückseite, ein erstes Detektormaterial und ein zweites Detektormaterial zwischen der Vorderseite und der Rückseite aufweist. Dabei ist ein Raum zwischen der Vorderseite und der Rückseite des Detektorelements von mehreren durchgängigen Bereichen aus dem ersten Detektormaterial und mindestens einem durchgängigen Bereich aus dem zweiten Detektormaterial ausgefüllt, und jeder Bereich verbindet die Vorderseite mit der Rückseite des Detektorelements. Die Bereiche sind derart angeordnet, dass jeder Bereich aus dem ersten Detektormaterial an mindestens einen Bereich aus dem zweiten Detektormaterial grenzt. Erfindungsgemäß erfolgt eine Energiedeposition in zumindest den Bereichen aus dem ersten Detektormaterial in Abhängigkeit von einem Einstrahlungswinkel der Strahlung auf das Detektorelement.

Und es wird ein Vorzugs-Schwenkwinkel bestimmt, für den die in dem ersten und/oder zweiten Energiebereich deponierte Energie ein Maximum oder ein Minimum aufweist. Dann kann eine Richtung der Strahlungsquelle bezüglich des Detektorelementes in Abhängigkeit von dem Vorzugs-Schwenkwinkel bestimmt werden.

Ferner ist bevorzugt ein Schritt zum Bestimmen eines Richtungsparameters aus dem Verhältnis zwischen der ersten und zweiten deponierten Energie vorgesehen. Der Richtungsparameter wird bevorzugt für verschiedene Detektionsrichtungen bestimmt, wobei die jeweiligen Detektionsrichtungen im Wesentlichen normal zur der Vorderseite des Detektorelements sind. Dann wird aus dem Richtungsparameter eine Richtung der Strahlungsquelle bezüglich des Detektorelements ermittelt.

Bei einem Schwenken des Detektorelementes um einen Schwenkwinkel ändern sich die Zählrate und die deponierte Energie in den verschiedenen Energiebereichen. Dieses Detektionsverhalten hängt davon ab, ob die Vorzugsrichtung des Detektorelementes auf die Strahlungsquelle hin oder von ihr weg geschwenkt wird. Für einen höherenergetischen Teil des Spektrums nimmt die jeweilige Zählrate oder Intensität im Spektrum ab, wenn der Detektor bzw. dessen Vorzugsrichtung von der Strahlungsquelle weg bewegt wird. Gleichzeitig nimmt die in dem niederenergetischen Teil des Spektrums registrierte Anzahl von Ereignissen zu.

Vorzugsweise wird ein Detektorelement verwendet, bei dem die ersten und zweiten Bereiche aktive und getrennt auslesbare Detektormaterialien aufweisen. Dabei werden dann die für die ersten, zweiten und dritten Energiebereiche bestimmten und in den ersten und zweiten Detektormaterialien deponierten Energien summiert. Aus den zunächst getrennt ausgelesenen Signalen für die Farbparameter in den verschiedenen Energiebereichen werden somit Summensignale gebildet. Dadurch lässt sich die Materialanalyse in Analogie zum Farbsehen noch zuverlässiger durchführen, da eine Verbesserung der Statistik um den Faktor 2 oder mehr erreicht werden kann. Die getrennt ausgelesenen Signale der ersten und zweiten Bereiche werden gleichzeitig getrennt für die Richtungsanalyse verwendet.

Erfindungsgemäß ist ferner eine Detektoranordnung zur Detektion von Strahlung vorgesehen, welche von einer Materialprobe abgegeben ist, mit:

    a) mindestens einem Detektorelement, welches ein aktives Detektormaterial aufweist;

    b) einer an das Detektorelement gekoppelten Erfassungseinrichtung, welche Signale von dem Detektorelement empfängt; und mit

    c) einer Auswerteeinrichtung, welche in Abhängigkeit von den Signalen eine Verteilung der in dem Detektormaterialien deponierten Energien erfasst und ein Verfahren zum Bestimmen der Materialzusammensetzung nach dem erfindungsgemäßen Verfahren durchführt.

Unter Detektormaterial wird im Folgenden ein beliebiges Material verstanden, welches die jeweilige geometrische Form der ersten und/oder zweiten Bereiche des Detektorelementes ausfüllt. In bestimmten Ausführungsformen der Erfindung weist das jeweilige erste und/oder zweite (Detektor-)Material vorgegebene physikalische Eigenschaften, wie zum Beispiel Absorptionseigenschaften hinsichtlich bestimmter Strahlung, Szintillatoreigenschaften oder Ähnliches, auf. Vorzugsweise ist eines dieser Detektormaterialien ein aktives Material, welches ein Signal liefert, zum Beispiel Szintillationslicht, wenn es von einem Gamma-Quant getroffen wird. Das jeweils andere Detektormaterial kann dann ebenfalls ein aktives Material aufweisen, oder als passives Material, also Absorbermaterial für die in Frage kommende Strahlung oder Quanten wirken, und im letzteren Fall bei Eintreffen von Strahlung kein Signal liefern.

In einer Weiterbildung der erfindungsgemäßen Detektoranordnung ist die Erfassungseinrichtung als eine, vorzugsweise energieauflösende, Lichtmesseinrichtung ausgestaltet, welche Szintillationslicht als Signale erfasst. Vorzugsweise erfasst die Lichtmesseinrichtung dabei integral das Szintillationslicht des aktiven Detektormaterials. Eine Lichtmesseinrichtung, beispielsweise ein Photomultiplier, oder auch eine andere Signalanalyseeinrichtungen, misst somit die in den szintillierenden Bereichen deponierte Energie. Es kann somit ein Impulshöhenspektrum der deponierten Energie ermittelt werden.

In einer alternativen Ausführungsform ist das aktive Detektormaterial als Halbleiterdetektor ausgebildet, wobei elektrische Signale auslesbar sind. Sind Bereiche als Halbleiterdetektor ausgeführt, erzeugt die eintreffende Photonenstrahlung freie Ladungsträger, welche als schnelle elektrische Signale ausgewertet werden können. Werden Halbleiterdetektoren verwendet, ist keine zusätzliche Lichtmesseinrichtung notwendig.

Bevorzugt weist die Auswerteeinrichtung einen Speicher auf, in dem Wertekombinationen von Farbparametern vorliegen, welche bekannten Materialzusammensetzungen entsprechen. Durch Vergleich mit diesen bekannten Kombinationen erkennt die Auswerteeinrichtung, ob eine bekannte Materialzusammensetzung, zum Beispiel Sprengstoffe in der Materialprobe vorhanden sind.

Die Erfindung sieht ferner eine Verwendung der erfindungsgemäßen Detektoranordnung zum Erkennen von Sprengstoffen in zu untersuchenden Materialproben oder bei der Räumung von Landminen vor. Insbesondere der Einsatz zum Aufspüren von stickstoffhaltigen Materialien, wie zum Beispiel Sprengstoffen, bei Gepäck- oder Frachtkontrollen ist vorteilhaft.

Weitere vorteilhafte Ausgestaltungen und Weiterbildungen der Erfindung sind Gegenstand der Unteransprüche sowie der im Folgenden beschriebenen Ausführungsbeispiele.

Im Folgenden wird die Erfindung anhand von bevorzugten Ausführungsformen und Ausführungsbeispielen unter Bezugnahme auf die Figuren beispielhaft näher erläutert. Dabei zeigt:

Figur 1: eine erste Ausführungsform der erfindungsgemäßen Detektoranordnung;

Figur 2: durch Neutronenaktivierung erzeugte Gammalinien;

Figur 3: eine erfindungsgemäße Aufteilung eines Intensitätsspektrums zur Materialanalyse;

Figur 4: eine erste erfindungsgemäße Verfahrensschrittabfolge;

Figur 5: ein erfindungsgemäßes Detektorelement;

Figur 6: eine zweite Ausführungsform der erfindungsgemäßen Detektoranordnung;

Figur 7A: ein Klein-Nishina-Plot der Compton-Streuung;

Figur 7B: ein Gamma-Intensitätsspektrum;

Figur 8: den Verlauf von Strahlungs-Trajektorien durch ein Detektorelement;

Figur 9: Weglängen und Energiedepositionen im Detektorelement;

Figur 10: eine erfindungsgemäße Aufteilung eines aufgenommenen Intensitätsspektrums;

Figur 11: verschiedene geometrische Ausführungsformen des Detektorelementes;

Figur 12, 13: Simulationen von aufgenommenen Spektren mittels einer erfindungsgemäßen Detektoranordnung;

Figur 14: eine zweite erfindungsgemäße Verfahrensschrittabfolge;

Figur 15: eine dritte Ausführungsform der erfindungsgemäßen Detektoranordnung; und

Figur 16: eine vierte Ausführungsform der erfindungsgemäßen Detektoranordnung.

In den Figuren sind gleiche oder funktionsgleiche Elemente mit, sofern nichts anderes angegeben ist, mit denselben Bezugzeichen versehen worden.

Die Erfindung ermöglicht die Erkennung bestimmter Elemente in einer zu untersuchenden Materialprobe. Als besonderes Anwendungsfeld kommt dabei die Detektion von Sprengstoffen in Frage, beispielsweise zur Minenräumung.

Daher sieht eine erste Ausführungsform der erfindungsgemäßen Detektoranordnung eine Neutronenquelle zum Beschuss einer Materialprobe vor, wie beispielsweise einen bestimmten Bereich des Erdbodens mit Neutronen. Dadurch wird das beschossene Material aktiviert und sendet charakteristische Gammastrahlung aus.

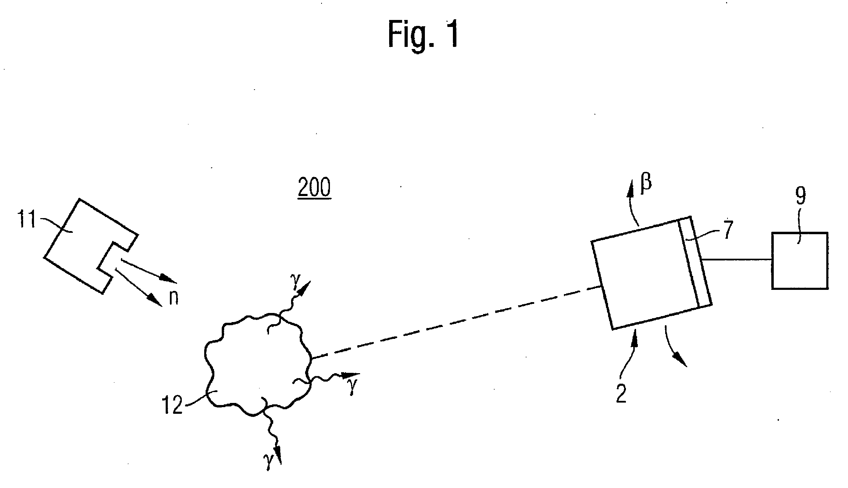

Figur 1 zeigt eine entsprechende erfindungsgemäße Detektoranordnung 200. Es ist eine Neutronenquelle 11 vorgesehen, die vorzugsweise gerichtet Neutronen n aussendet, welche auf eine Materialprobe 12 eingestrahlt werden. Durch Einfang der Neutronen erfolgt eine Kernreaktion der jeweiligen Materialprobe, sodass im Anschluss Gamma-Quanten ausgesendet werden, welche von einem Detektorelement 2, welches schwenkbar angeordnet ist und ein aktives Detektormaterial, wie zum Beispiel ein Szintillatormaterial, aufweist, detektiert wird. Dazu ist ein Photomultiplier 7 vorgesehen, der integral die in den aktiven Detektormaterial deponierte Energie misst und einer Auswerteeinrichtung 9 zuführt. Ist das Detektorelement beispielsweise richtungsauflösend ausgeführt, kann durch Schwenken um den Winkel β winkelauflösend die Position der Gamma-Quelle, also der Materialprobe 12, bestimmt werden.

Das Material der Erdoberfläche weist im Wesentlichen leichte Elemente H, C, N, O, Mg, Si, Al auf. Besonders häufig treten $SiO_2$, Quarzsand und Aluminium-Magnesium-Silikate auf. Mit steigender Neutronenenergie fallen die Neutroneneinfangquerschnitte dieser Elemente ab. Neutronen unterhalb von 4 MeV werden besonders häufig eingefangen. Beispielsweise lauten die Einfangquerschnitte für thermische Neutronen bei Kohlenstoff 3,3 mb, Sauerstoff < 0,2 mb, Stickstoff 80 mb, Magnesium 63 mb, Silizium 130 mb, Aluminium 230 mb. Der Einfang eines Neutrons führt insbesondere bei den Elementen Stickstoff, Magnesium, Silizium, Aluminium zu Energiegewinnen zwischen 4,5 und 10 MeV. Diese angeregten Zustände fallen über eine Kaskade über einen oder mehrere Zwischenzustände unter Aussendung von Gammastrahlung in den Grundzustand zurück. Lediglich Stickstoff hat einen direkten Übergang mit Drehimpuls $j = {}^3/_2$ zu $j = {}^1/_2$ von 10 MeV mit 10 % Wahrscheinlichkeit. Üblicherweise ergeben sich drei bis fünf dominante Linien in dem entsprechenden Gammaspektrum bei Energien zwischen 2,5 und 7,5 MeV.

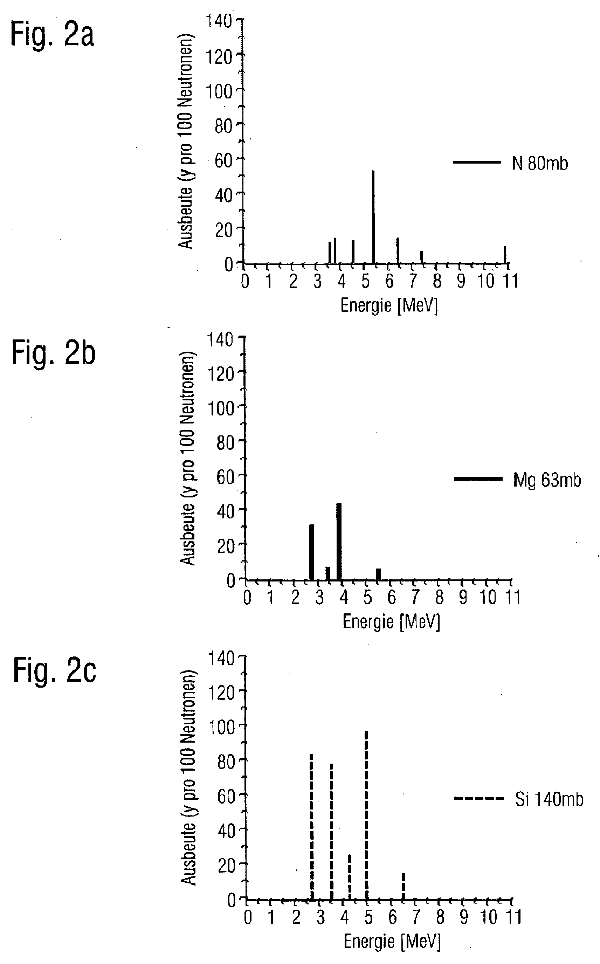

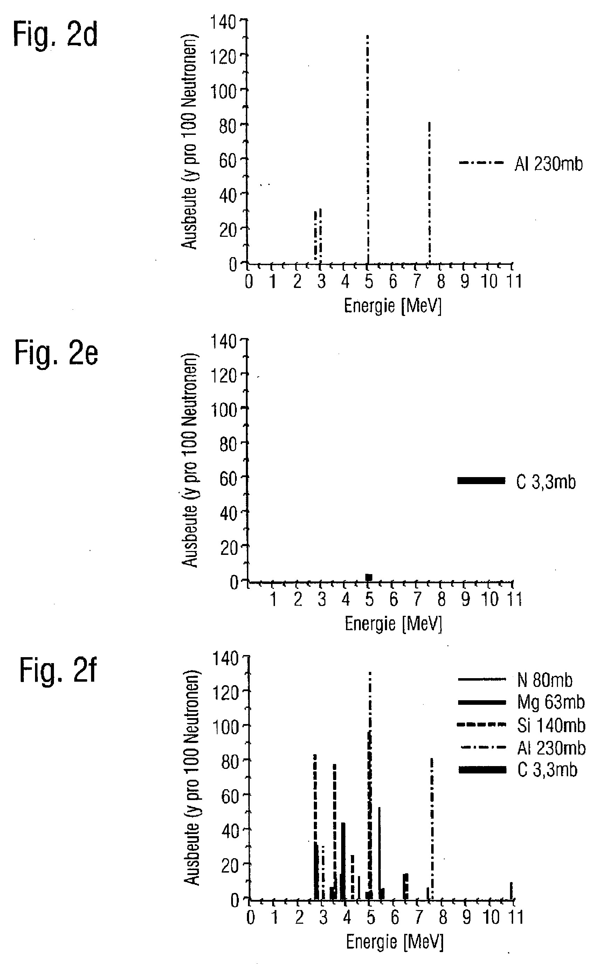

Die Figur 2 zeigt typische Ausbeuten an Gammastrahlung nach Neutronenreaktionen bzw. einer Neutronenaktivierung von Stickstoff, Magnesium, Silizium, Aluminium und Kohlenstoff (Figur 2a-e) sowie Ausbeuten, die sich bei einer entsprechenden Elemente- oder Materialprobenmischung ergeben (Figur 2f). Dabei liefert die Ausbeute die Anzahl der Gamma-Quanten pro 100 eingefangener Neutronen. Insbesondere der für die Sprengstofferkennung wichtige Stickstoff hat zwischen 5 und 6,5 MeV vier signifikante Linien sowie die 10%-ige Abregung bei 10,8 MeV.

Üblicherweise wird versucht, mittels hochauflösender Spektroskopie einzelne Linien in den sich ergebenden Gammaspektren aufzulösen und so Anhäufungen von Stickstoff zu verifizieren. Diese hohe Energieauflösung eines entsprechenden Detektors ist allerdings mit sehr geringer Ansprechwahrscheinlichkeit und extrem hohem apparativen Aufwand verbunden, um zwischen Linien anderer Elemente unterscheiden zu können. Diese liegen, wie in der Figur 2f dargestellt ist, sehr eng nebeneinander.

Gemäß der Erfindung erfolgt keine hochauflösende Gammaspektroskopie, sondern es werden vollständige Spektren aufgenommen. Die jeweiligen Gammalinien erzeugen in dem jeweiligen Detektorelement breite Comptonverteilungen, die sich, wie es sich von der Compton-Kante bis zu kleinen Energien erstrecken. Gemäß der Erfindung ist nun zum Detektieren eines gesuchten Materials, beispielsweise Stickstoff, in der mit Neutronen aktivierten Materialprobe vorgesehen, das aufgenommene Spektrum in mindestens drei Teile zu unterteilen und jeweils die integrale Intensität über diese drei Bereiche zu bestimmen, wobei jeder Intensität ein Farbparameter zugeordnet wird.

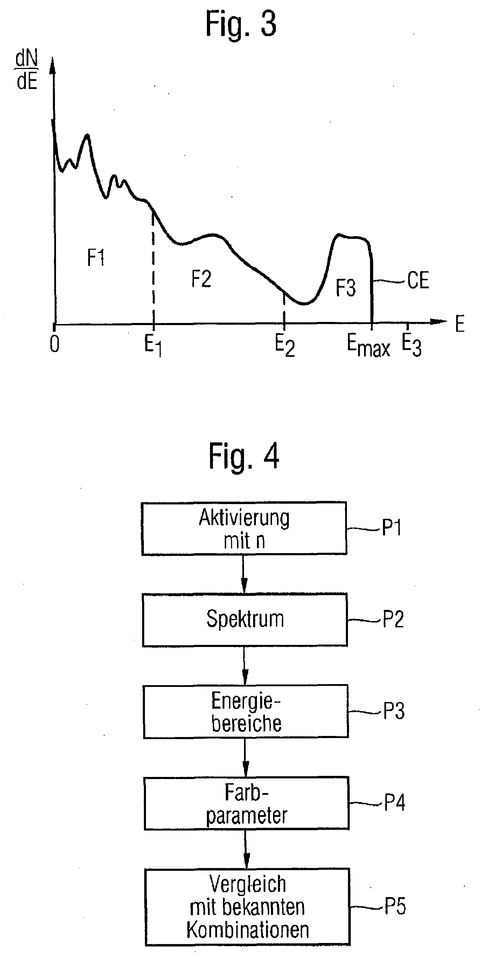

Erfindungsgemäß wird ein dem Farbsehen ähnliches Erkennungsverfahren zum Detektieren bestimmter Elemente in der Materialprobe angewandt. Die Figur 3 zeigt beispielhaft ein aufgenommenes Intensitätsspektrum bzw. eine aufgenommene Verteilung der in dem aktiven Detektormaterial, also in dem Szintillatormaterial deponierten Energien. Dabei bezeichnet CE die Compton-Kante bei einem maximalen Energieübertrag $E_{max}$. Es wird zunächst die deponierte Energie in einem ersten Energiebereich, z. B. zwischen 0 und $E_1$ integral ermittelt.

Es wird dazu das Integral zwischen 0 und $E_1$ über die Intensität dN/dE berechnet und somit ein erster Farbparameter F1 festgelegt. Es wird die deponierte Energie in einem zweiten Energiebereich zwischen $E_1$ und $E_2$ ermittelt, indem das Integral zwischen $E_1$ und $E_2$ zur Bestimmung eines zweiten Farbparameters F2 berechnet wird. Schließlich erfolgt erfindungsgemäß eine Integration zwischen $E_2$ und $E_3$ zur Berechnung des entsprechenden Integrals und der Ableitung des Farbparameters F3. Beispielsweise könnten die Energiebereiche zwischen 1 und 3 MeV, 3 und 5 MeV und oberhalb von 5 MeV liegen.

Für jedes der beispielsweise in der Figur 2 dargestellten Elemente ergibt sich ein charakteristisches Spektrum und somit auch eine charakteristische Kombination von Farbparametern F1, F2 und F3. Analog dem Farbsehen ergibt sich aus drei Energie- bzw. Frequenzbereichen, die beim menschlichen Farbsehen im Wesentlichen den drei Grundfarben Rot, Grün und Blau entsprechen, insgesamt ein farbiges Signal mit einem Farbeindruck. Erfindungsgemäß wird nun ein Farbeindruck aus dem gemessenen Spektrum durch die Kombination (F1, F2, F3) bestimmt.

In einem entsprechenden dreidimensionalen Farbenraum, der aus den Koordinaten F1, F2 und F3 aufgespannt wird, kann prinzipiell den zu detektierenden Elementen ein Vektor oder zumindest ein Volumen in dem Farbenraum zugeordnet werden. Führt nun eine gemessene bzw. berechnete Kombination von Farbparametern (F1, F2, F3) für ein Spektrum einer unbekannten Materialprobe zu einem Vektor (F1, F2, F3), der in ein solches Volumen zeigt, wird ein gesuchtes Element erkannt. Damit kann trotz der geringen Energieauflösung des verwendeten Detektors bei genügend hoher Zählrate eine Farbanalyse des Spektrums erfolgen und somit das Material der zum Beispiel mit Neutronen aktivierten Materialprobe erkannt werden.

Die Figur 4 erläutert die vorzunehmenden Verfahrensschritte. In einem ersten Schritt P1 erfolgt die Aktivierung mit Neutronen. Anschließend wird ein vollständiges Spektrum der in dem jeweiligen Detektormaterial deponierten Strahlungsenergie registriert, wobei die Strahlung von der Materialprobe emittiert wurde (Schritt P2). Dann werden die deponierten Energien in den drei Energiebereichen zum Beispiel durch Integration bestimmt (Schritt P3) und entsprechende Farbparameter F1, F2, F3 zugeordnet (Schritt P4). Ein jeweiliger Farbparameter kann beispielsweise proportional zu der entsprechenden Energie gewählt werden oder auch zunächst mit einem Gewichtungsfaktor multipliziert werden. Durch Vergleich mit bekannten Kombinationen von Farbparametern für Referenzzusammensetzungen oder auch einzelne Elemente wird im Schritt P5 erkannt, ob ein fragliches Element in der Materialprobe vorhanden ist.

Besonders günstig für die Detektion von Sprengstoff ist zudem eine richtungssensitive Erkennung von strahlendem Material bzw. zur Strahlung angeregtem Material einer Materialprobe.

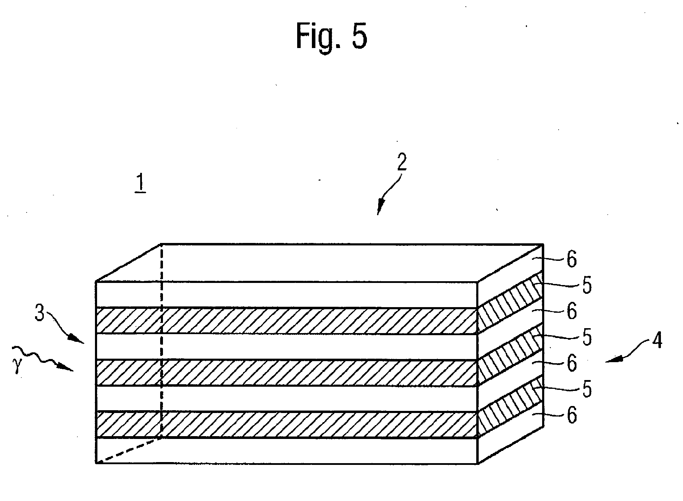

Die Figur 5 zeigt eine Detektoranordnung 1 mit einem Detektorelement 2, das eine winkelauflösende Detektion ermöglicht. In der Ausführungsform nach Figur 5 hat das quaderförmige Detektorelement 2 eine Vorderseite 3 und eine Rückseite 4. Dabei fallen im Wesentlichen durch die Vorderseite 3 Gammastrahlen $\gamma$ in das Detektorelement 2 ein.

Es sind jeweils abwechselnd Schichten 5, 6 aus einem ersten Detektormaterial und einem zweiten Detektormaterial vorgesehen. Die Schichten 5, 6 verbinden dabei die Vorderseite 3 mit der Rückseite 4. Beispielsweise sind die Schichten 5 aus einem Absorbermaterial für Compton-gestreute Elektronen und die Schichten 6 aus einem Szintillatormaterial gefertigt.

Vorzugsweise wird an der Rückseite 4 des Detektorelementes die von dem Szintillatormaterial erzeugte Lichtemission gemessen. Aus der gemessenen Lichtmenge bzw. der in den Schichten 6, welche Szintillatormaterial aufweisen, deponierten Energie lässt sich auf die Einfallsrichtung der Strahlung $\gamma$ bezüglich einer vorzugsrichtung oder Ebene des Detektorelementes 2 schließen. In dem hier beispielhaft aus Schichten 5, 6 aufgebauten Detektorelement 2 ist eine Vorzugsebene durch die Schichtebenen vorgegeben.

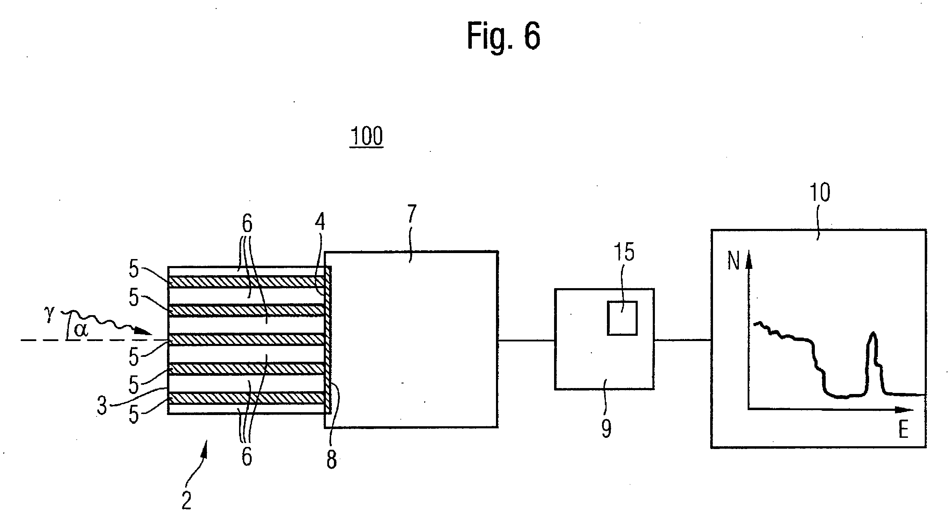

In der Figur 6 ist eine erweiterte Detektoranordnung 100 dargestellt. Das aus schichtartigen Bereichen aufgebaute Detektorelement 2 weist abwechselnd Schichten 5, 6 aus Absorber- und szintillierendem Detektormaterial auf, wobei eine Vorderseite 3 im Wesentlichen in Richtung einer Strahlungsquelle für Gammastrahlung $\gamma$ gerichtet ist. An die Rückseite 4 ist ein Photomultiplier 7 gekoppelt, der integral Szintillationslicht aus den Schichten bzw. Bereichen 6 erfasst. Dabei liegt eine Photokatode 8 auf der Rückseite des Detektorelementes 2 an.

Eine Auswerteeinrichtung 9 mit einer Speichereinrichtung 15 liest die entsprechenden Signale aus dem Photomultiplier 7 aus und erstellt insbesondere ein Spektrum für die deponierte Energie in dem Szintillatormaterial der Detektorbereiche 5. Die Auswerteeinrichtung 9 kann beispielsweise durch einen Computer realisiert sein, der über eine geeignete Schnittstelle an den Photomultiplier gekoppelt ist und eine Impulshöhenanalyse der erfassten Ereignisse durchführt. Der entsprechende Computer kann auch eine Erkennung der Materialzusammensetzung, wie es bezüglich der Figuren 1-4 näher erläutert wurde, durchführen. Bei der Richtungserkennung werden zunächst die Ereignisse gezählt, bei denen in dem Szintillatormaterial Energie deponiert wird und in Abhängigkeit von der deponierten Energie aufgetragen. Es wird aus der Form des aufgenommenen Spektrums sowohl die Richtung bzw. der Winkel der vorzugsrichtung des Detektorelementes mit der jeweiligen Gammastrahlungsquelle bestimmt sowie auch auf die Elementezusammensetzung der jeweiligen Gammastrahlungsquelle geschlossen oder das Detektorelement derart gedreht und/oder geschwenkt, dass aus der Veränderung der auslesbaren Signale in Abhängigkeit von der jeweiligen Stellung des Detektorelementes die Richtung der Strahlungsquelle bezüglich der Vorderseite bestimmt werden kann.

In der Figur 6 ist der Einstrahlungswinkel $\alpha$ zwischen der Vorzugsrichtung bzw. -ebene des Detektorelementes und der Vorwärtsbewegung der Gamma-Quanten angegeben. Dieser Winkel ist bei einem Einfall von hochenergetischen Gamma-Quanten auch der Vorzugswinkel der Elektronen-Flugrichtung. Erfindungsgemäß erfolgt eine Kollimation der zu detektierenden Strahlung in dem Detektormaterial selbst. Ein aufwändiger Kollimator vor dem Detektorelement 2 ist nicht notwendig.

Bei der Detektion von Gammastrahlung, welche von durch Neutronen aktivierten Materialien erzeugt wird, sind typischerweise Energien von Gamma-Quanten von über 500 keV involviert. Bei der Detektion von solchen Photonen in Detektormaterialien wird die Energie des Photons meist nicht vollständig an Elektronen und bei Überschreiten einer Schwellenenergie von $E_\gamma$ = 1.022 keV auch an Elektronen-Positronen-Paare übertragen.

Im Folgenden wird die Funktionsweise des richtungsauflösenden Detektorelementes bzw. der Detektoranordnung anhand von Compton-Streuung bei mittleren Energien zwischen 100 keV und 10 MeV erläutert, wobei ein teilweiser Übertrag der Gamma-Energie erfolgt. Ein vollständiger Energieübertrag dominiert bei kleineren Energien $E_\gamma$ < 100 keV durch den Photoeffekt und bei großen Energien $E_\gamma$ » 1 MeV durch die Paarbildung. Bei kleinen Gamma-Energien, werden die erzeugten Elektronen unter größeren seitlichen Winkeln bezüglich der Photonenrichtung emittiert. Je höher die Photonenenergie über der jeweiligen Reaktionsschwelle liegt, desto stärker werden die Elektronen oder auch Positronen unter Vorwärtswinkeln, also in Richtung der Gamma-Photonen, gestreut und gebündelt. Mit steigender Energie der zu detektierenden Strahlung werden ferner die sekundär erzeugten Elektronen oder Positronen zunehmend nach vorne gestreut, was für alle Absorptionsprozesse, wie Photo-Effekt, Compton-Effekt und Paarbildung der Fall ist. Die von den Gamma-Photonen produzierten Elektronen können in einem Festkörper leicht, d. h. über einen kurzen Weg, abgebremst werden. Deshalb ist auch eine Kollimation bzw. eine richtungssensitive Auslesung der entsprechenden Signale leichter zu erreichen.

Es erfolgt die Richtungsselektion durch die Geometrie der verschiedenen Detektorbereiche, die zum Beispiel, wie es in den Fig. 5 und 6 dargestellt ist, als Schichten oder Platten laminiert ausgebildet sind, wobei die Schichtdicke kleiner als die mittlere Elektronenreichweite gewählt ist. Da über den dominierenden Compton-Streuprozess nur ein Teil der Energie an den Detektor übertragen wird, ergeben sich Plattenstärken von typischerweise 1 - 2 cm. Die Detektorplatten sollten so voneinander getrennt sein, dass ein Elektron nicht in zwei verschiedenen Platten ein Signal verursacht. Dies kann zum Beispiel dadurch erreicht werden, dass die einzelnen Platten aus einem aktiven Detektormaterial durch passive Absorberschichten getrennt sind. Bei schweren Absorbern, wie Blei oder Eisen genügen in der Regel Schichtdicken von einigen Millimetern.

Die entsprechende Detektoranordnung eignet sich insbesondere für den Energiebereich zwischen 500 keV und 10 MeV, in dem der Compton-Effekt dominiert. Sie kann jedoch auch darüber hinaus angewendet werden, obwohl nur wenige Gamma-Linien oberhalb des Compton-Energiebereiches liegen. Zum Beispiel kann insbesondere die Stickstoff-Linie bei 10,8 MeV detektiert werden. Die im Weiteren beschriebenen physikalischen Vorgänge und Detektionsverfahren werden anhand des Compton-Effektes näher erläutert, eignen sich jedoch auch zur Anwendung in anderen Energiebereichen. Beim Compton-Effekt ergibt sich eine feste Beziehung zwischen der Einfallsrichtung des Photons und der Flugrichtung des erzeugten Compton-gestreuten Elektrons. Dabei ist der Energieübertrag $\Delta E$ des Photons auf das Compton-Elektron abhängig von dem Streuwinkel. Der maximale Energieübertrag $\Delta E_{max}$ ergibt sich für eine 180°-Streuung. Dann bewegt sich das Compton-Elektron mit der Energie $E_{max}$ in derselben Richtung wie das eingefallene Photon weiter. Der maximale Energieübertrag ergibt sich zu

$$(Gl. 1) \qquad \Delta E_{max} = E_{max} = E_\gamma \frac{2\varepsilon}{1+2\varepsilon} .$$

Wobei $\varepsilon = \frac{E_\gamma}{m_e c^2}$ , und $m_e c^2$ = 511 keV entspricht der Elektronenruhemasse.

Die Figur 3A zeigt die Winkelabhängigkeit der Streuung als Auszug eines Klein-Nishina-Plots. Dabei ist der Wirkungsquerschnitt $d\sigma/d\Omega$ in barn gegen den Streuwinkel $\vartheta$ des Elektrons aufgetragen. Mit wachsender Gamma-Energie werden die Compton-Elektronen immer mehr nach vorne gestreut. Dies ist auch bei der Paarbildung und beim Photoeffekt der Fall. In der Figur 3A entsprechen $\varepsilon$ = 1 $E_\gamma$ = 0,511 MeV und $\varepsilon$ = 5 $E_\gamma$ = 2,555 MeV. Bereits bei $\varepsilon$ = 1 werden die Elektronen stark in Vorwärtsrichtung gestreut.

Das Compton-Elektron verliert seine kinetische Energie durch Stöße mit weiteren Hüllenelektronen in dem Detektormaterial, was zu Ionisationen führt. Auch bei weiteren Stößen der sekundären Elektronen ergibt sich bei höheren Energien wegen der Impulserhaltung eine hauptsächlich vorwärts gerichtete Streurichtung. Somit fliegen die erzeugten Elektronen mit hoher Wahrscheinlichkeit in der Vorwärtsrichtung der ursprünglichen Gamma-Quanten. Es ergibt sich eine "Vorwärtskaskade" der emittierten Elektronen. Die entstehenden Sekundärelektronen deponieren weiter ihre Energie in dem Material und regen Lichtemission in dem szintillierenden Detektormaterial an. Dies wird beispielsweise durch den Photomultiplier 7 registriert. Die entsprechenden erzeugten elektrischen Signale, welche der Auswerteeinrichtung 9 zugeführt sind, sind proportional zu der in dem Szintillatormaterial des Detektors deponierten Energie. Das entsprechende Impulshöhenspektrum weist im optimalen Fall dann eine Compton-Kante und den Photo-Peak auf.

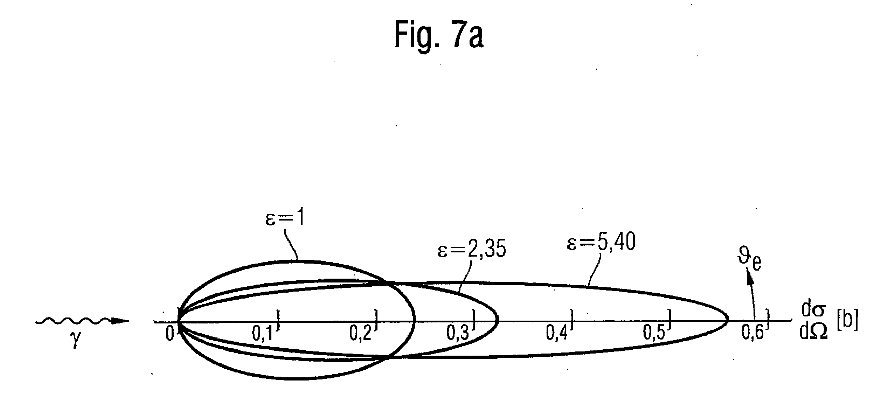

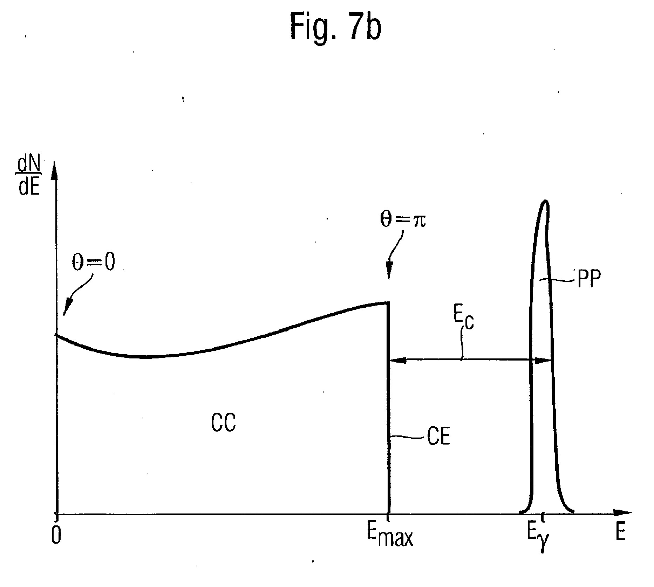

Die Figur 7B zeigt beispielhaft ein Spektrum der Elektronen für eine Streuung mit Gamma-Quanten der Energie $E_\gamma$. Dabei ergibt sich bis zu der maximalen Übertragsenergie $E_{max}$ das Compton-Kontinuum CC, wobei bei einem Streuwinkel von $\theta$ = 0° die niedrigste Energie erreicht wird, und bei der Vorwärtsstreuung mit $\theta$ = n die maximale Energie $E_{max}$, die die Compton-Kante CE bildet. Ferner ist ein Photo-Peak PP dargestellt, der in einem Abstand von $E_c = E_\gamma - E_{max}$ von der Compton-Kante CE auftritt.

Es wird die Energiedeposition nicht in dem vollständigen Detektorvolumen zwischen der Vorder- und Rückseite erfasst, sondern nur in den ausgezeichneten Bereichen bzw. Segmenten, die Szintillatormaterial aufweisen. Dadurch lässt sich eine richtungsabhängige Modulation der Energiedeposition durch Compton-Elektronen feststellen. Erfindungsgemäß wird eine proportionale Lichtmenge zu der in dem jeweiligen szintillierenden Detektormaterial deponierten Energie durch den Photodetektor erfasst. Dabei spielt es keine Rolle, an welcher Seite des Detektorelements der Photomultiplier 7 angeordnet ist.

Zur einfacheren Erläuterung werden nur Compton-Streuprozesse betrachtet, die einen maximalen Streuwinkel, also 180°, aufweisen. Im Rahmen eines CSDA-Modells geben die dabei entstehenden Compton-Elektronen ihre Energie entlang einer Strecke ab, die in der Richtung des jeweiligen einfallenden Gamma-Quants ist. Dabei steht CSDA für Continuous Slowing Down Approximation. Je nach Eintrittswinkel und -ort des Gamma-Quants in das Detektorelement ergeben sich unterschiedliche Energiedepositionen in dem Szintillatormaterial.

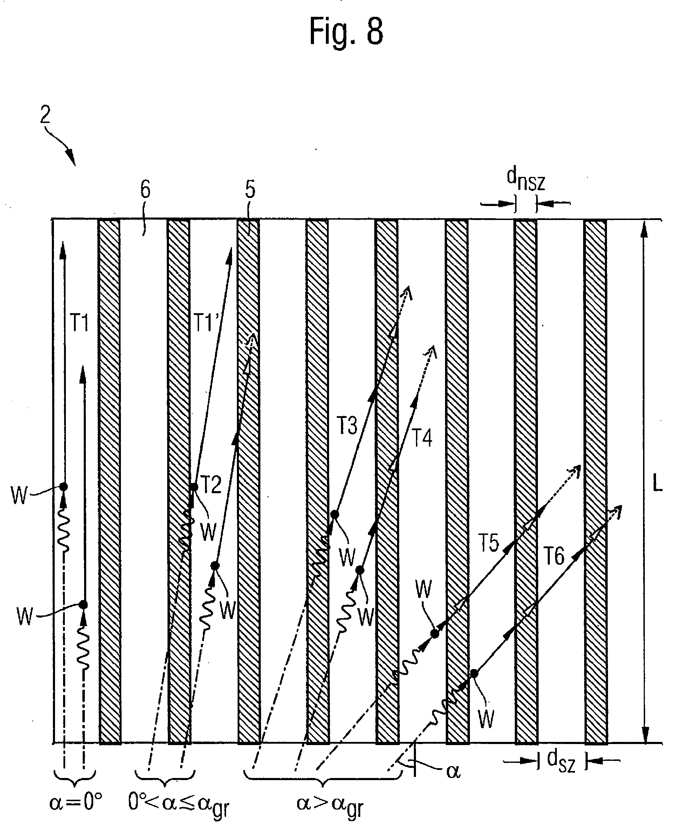

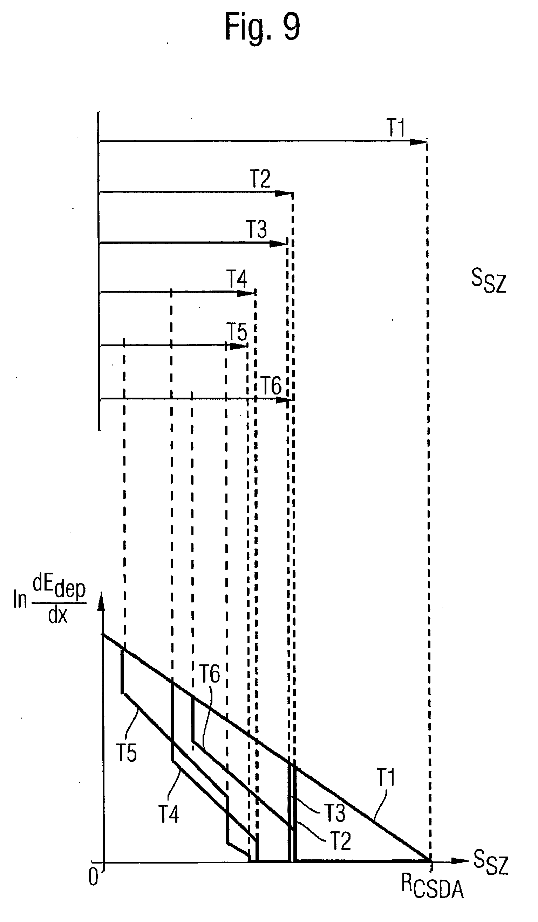

In der Figur 8 sind mögliche Trajektorien durch ein Detektorelement 2 dargestellt und in der Figur 9 die einer jeweiligen Trajektorie zugeordnete verbleibende Weglänge $S_{SZ}$ im Szintillatormaterial sowie die Energiedeposition eines jeweiligen Gamma-Quants.

In der Figur 8 sind die jeweiligen Wechselwirkungspunkte W, d. h. der Ort einer jeweiligen 180°-Compton-Streuung durch geschlossene Kreise dargestellt. Die Strichpunktlinien und Schlangenlinien deuten das einlaufende Photon an. Die Pfeile mit geschlossener Pfeilspitze bezeichnen eine Energiedeposition der Compton-Elektronen in Szintillatormaterial und die Pfeile mit einer offenen Pfeilspitze Energiedeposition in Absorber bzw. nicht-szintillierendem Material der Detektorbereiche 5.

Bei einem frontalen Einfall, also parallel zu den Ebenen der Detektormaterialschichten 5, 6 und bei einem Eintritt des Gamma-Quants in einen Bereich 6 aus szintillierendem Detektormaterial wie es die Trajektorien T1 darstellen, wird die gesamte Energie in einem Segment bzw. einer Schicht des Detektorelementes deponiert. Die jeweilige Energiedeposition $E_{dep}$ in Bereichen mit szintillierendem Material ist in der Figur 5 genauer dargestellt.

In der Figur 9 sind zunächst die verbleibenden Weglängen $S_{SZ}$ im Szintillatormaterial für die in der Figur 8 dargestellten Trajektorien T1-T6 dargestellt. Ferner zeigt die Figur 9 in logarithmischer Darstellung die Energiedeposition $E_{dep}$ in dem Szintillatormaterial in Abhängigkeit von der Weglänge $S_{SZ}$.

Sofern die Länge L der Detektorbereiche größer ist als $R_{CSDA}$, also die Reichweite der Strahlung in dem jeweiligen Material, erfolgt die größte Energiedeposition im Szintillatormaterial bei einem frontalen Einfall auf das Detektorelement gemäß der Trajektorie T1. Dann wird die gesamte Elektronen-Energie in einem der Detektorbereiche mit szintillierendem Detektormaterial deponiert. Dies gilt für alle Energien der Compton-Elektronen.

Gemäß der Figur 5 wird über die gesamte Reichweite der Trajektorie T1 Energie im Szintillatormaterial deponiert, welche beispielsweise mittels eines angekoppelten Photomultipliers 7 gemessen wird.

Bei steigendem Einfallswinkel $\alpha$ steigt die Wahrscheinlichkeit, dass Compton-Elektronen aller Energien teilweise Energie nicht im szintillierenden Material deponieren, sondern in einer der Absorberschichten 5. Dadurch reduziert sich für jede Elektronen-Energie des Spektrums die Wahrscheinlichkeit einer kompletten Energiedeposition in der jeweiligen aktiven Detektorschicht.

Bei der Trajektorie T4 erfolgt beispielsweise zunächst eine Energiedeposition im Szintillatormaterial, dann im Absorbermaterial bzw. nicht-szintillierendem Material und erneut im Szintillatormaterial. Die verbleibende Weglänge im Szintillator ist daher erheblich geringer gegenüber der Trajektorie T1.

Auch die Kurve für die Energiedeposition im Szintillatormaterial zeigt deutlich Stufen, welche durch die Energiedeposition im Absorbermaterial hervorgerufen sind. Je kleiner die Dicke $d_{SZ}$ und $d_{nsz}$ der Bereiche mit Szintillatormaterial bzw. Absorbermaterial ist, desto größer wird die Wahrscheinlichkeit einer unvollständigen Energiedeposition in einem entsprechenden Szintillatormaterialsegment.

Sofern die Reichweite $R_{CSDA}$ der Compton-Elektronen im szintillierenden Material größer als die Breite $d_{SZ}$ des Bereichs ist, ergibt sich ein Grenzwinkel $\alpha_{gr}$, ab dem die maximale Energie $E_{max}$ nicht mehr in einem einzigen Szintillatorsegment zu deponieren ist:

$$(Gl.\ 2) \qquad E_{dep}\,(\alpha \geq \alpha_{gr}) < E_{dep,max}\,.$$

Sind die Breiten $d_{SZ}$, $d_{nsz}$ der szintillierenden und nichtszintillierenden Bereiche kleiner als die jeweilige Reichweite, steigt mit ansteigendem Einfallswinkel $\alpha$ die Wahrscheinlichkeit, dass die Energie in mehreren Szintillatorsegmenten deponiert wird. Eine Energiedeposition in k = 2, 3, 4 ... Szintillatorbereichen setzt voraus, dass zuvor in nichtszintillierendem Material mindestens eine Strecke $S_{NSZ} \geq k \cdot d_{NSZ}/\sin\alpha$ zurückgelegt worden ist. Die jeweilige deponierte Energie eines Elektrons sinkt somit mit der Anzahl der von den Sekundärelektronen durchlaufenden Szintillatorsegmente bzw. Bereiche. Es sind daher weitere Grenzwinkel bestimmbar, ab denen eine Energiedeposition in k = 2, 3, 4 usw. Szintillatorsegmenten erfolgt.

Betrachtet man nicht nur die Gamma-Quanten der Compton-Kante, sondern die Richtungsemissionen des gesamten Spektrums der Compton-Elektronen, so findet man bereits bei moderaten Gamma-Energien aufgrund des Impulserhaltungssatzes eine starke Vorwärtsstreuung aller erzeugten Compton-Elektronen, wie es in der Figur 3A auch dargestellt ist. Das bedeutet, dass auch die niederenergetischen Elektronen bei voller oder akurater Ausrichtung des Detektorelementes auf die Strahlungsquelle ihre Energie komplett im Targetmaterial bzw. Szintillatormaterial deponieren können. Wird das Detektorelement nun um einen Winkel zur Strahlungsquelle geschwenkt, dann werden auch viele niederenergetische Elektronen in das Absorbermaterial laufen und dort Energie verlieren ohne zum Detektorsignal beizutragen. Insgesamt bedeutet dies für das Detektorspektrum, dass hochenergetische Signale verloren gehen und das ganze Spektrum zu niederen Energien verschoben wird.

Da also die sekundären Elektronen schräg durch die Schichten oder Platten der ersten und zweiten Bereiche laufen, ergibt sich eine maximale Weglänge pro Schicht von zum Beispiel $S_{SZ} = d_{SZ}/\sin\alpha$. Da die Elektronen in jedem Punkt der Platten erzeugt werden können, bedeutet dies, dass der Weg für die Energieabgabe der Elektronen beschränkt ist, und die Elektronen können nur einen Teil ihrer Energie im jeweiligen Detektormaterial abgeben. Die restliche Energie wird in dem benachbarten Absorbermaterial abgegeben. Somit wird das gesamte Spektrum der deponierten Energie zu niedrigeren Energien verschoben.

Eine Aufnahme derartiger Energiespektren unter unterschiedlichen Einstrahlungswinkeln mit einem beweglichen Detektor oder mit mehreren Detektoren, die unter verschiedenen Winkeln zueinander angeordnet sind, ergibt Spektren mit den größten Hochenergieanteilen, wenn die Vorzugsrichtung bzw. die Vorderseite des Detektorelementes frontal auf die Gamma-Quelle gerichtet ist.

Die Richtung der einfallenden Strahlung bezüglich der Vorzugsrichtung des verwendeten Detektorelementes kann durch Aufnahme von Spektren der in dem Detektor durch die sekundären Elektronen deponierten Energie erfolgen. Dazu werden für verschiedene Schwenkwinkel $\beta$ des Detektorelementes Spektren aufgenommen und analysiert. Dabei wird das unter einem jeweiligen Schwenkwinkel aufgenommene Spektrum in mehrere Energiebereiche eingeteilt und die jeweilige darin deponierte Energie gemessen. Diese Energien können, wie es weiter unten erläutert ist, als Integrale über die Intensität betrachtet werden, oder es können auch einzelne Kanalnummern des entsprechenden Intensitätshistogramms verwendet werden. Da bei einem frontalen Auftreffen der Gamma-Quanten auf das Detektorelement auch die gestreuten, sekundären Elektronen in die Gamma-Richtung laufen und Energie in nur einer der Detektorschichten deponieren, ist der Hochenergieanteil im Spektrum dann am größten. Im einfachsten Fall genügen daher zwei Energiebereiche, ein niedriger und ein höherer, beispielsweise in der Nähe der Compton-Kante, um den Hochenergieanteil abzuschätzen.

Das Detektorelement wird also derart auf einen Schwenkwinkel eingestellt, dass der Hochenergieanteil maximal wird und der Niedrigenergieanteil in dem zugehörigen Spektrum im Vergleich zu den übrigen Schwenkwinkel minimal wird. Dann deutet die Vorzugsrichtung oder, im Falle eines schichtartig aufgebauten Detektors wie es in Figur 5, 6 oder 8 dargestellt ist, die Vorderseite in Richtung auf die Strahlungsquelle.

Um die Richtung der in ein erfindungsgemäßes Detektorelement einfallenden Strahlung zu bestimmen, wird bei einem alternativen möglichen Verfahren für den erfindungsgemäßen Detektor ein geeigneter Richtungsparameter $r$ bestimmt, welcher aus dem Verhältnis zweier Integrale in dem aufgenommenen Spektrum abhängt:

$$(Gl.\ 3) \qquad\qquad r = I_1/I_2$$

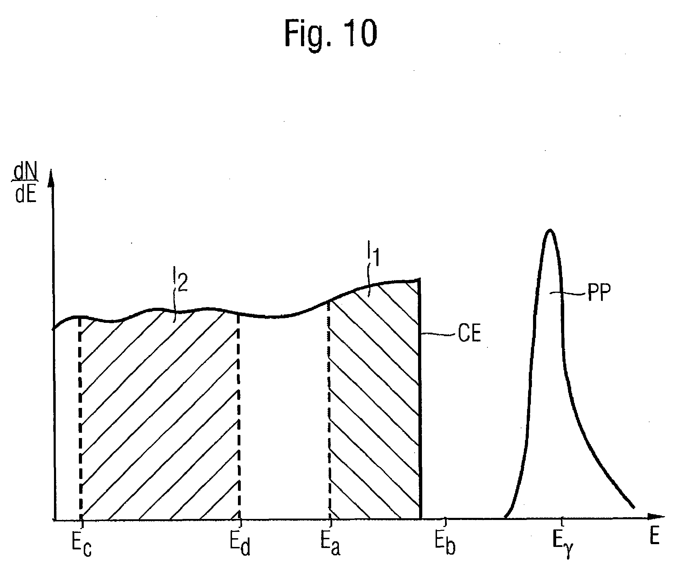

Dabei bezeichnet $I_1$ ein Integral zum Beispiel in der Nähe der Compton-Kante und $I_2$ ein Integral über einen niederenergetischen Bereich im Compton-Kontinuum in ausreichendem Abstand von der Compton-Kante CC. Das Integral $I_1$ deckt dabei also einen niederenergetischen Bereich ab und das Integral $I_2$ einen höherenergetischen Bereich. Figur 10 illustriert mögliche Integrationsgrenzen, für die Integrale

$$(Gl.\ 4) \qquad\qquad I_1 = \int_{E_a}^{E_b} \frac{dN(E)}{dE}\,dE \qquad\qquad und \qquad\qquad I_2 = \int_{E_c}^{E_d} \frac{dN(E)}{dE}\,dE\ .$$

wobei die Integrationsgrenzen $E_a$ und $E_b$ einen erwarteten Energiebereich überdecken, in dem die Compton-Kante liegt und $E_c$ und $E_d$, wie eingangs bemerkt, einen Bereich im Compton-Kontinuum begrenzen.

Die Wahl der Integrationsgrenzen $E_a$, $E_b$, $E_c$, $E_d$ hängt dabei vorzugsweise von der Energieauflösung $R(E) = \Delta E/E$ des Detektors ab. $\Delta E$ entspricht dabei der Halbwertsbreite eines durch monoenergetische Photonen gebildeten Photo-Peaks. Für den Abstand der Intervalle, also den Abstand zwischen $E_a$ und $E_d$ ergibt sich mit einer energieabhängigen Auflösung $R(E) = \Delta E/E$:

$$(Gl.\ 5) \qquad\qquad E_a - E_d > R(E_a) \cdot E_a \qquad und \qquad E_a - E_d > R(E_d) \cdot E_d\ .$$

Aus dem Richtungsparameter $r$ lässt sich dann auf den jeweiligen Einfallswinkel schließen. Bei einem Frontaleinfall bzw. bei niedrigem Einfallswinkel $\alpha$ der zu detektierenden Strahlung dominiert das Integral $I_1$, während bei

steigendem Einfallswinkel $\alpha$ der Richtungsparameter r abnimmt. Durch Drehen oder Schwenken des Detektorelementes kann daher ein Maximalwert für den Richtungsparameter r erreicht werden, und so auf die Richtung der entsprechenden Strahlungsquelle in Bezug auf die Vorzugsebene des Detektorelementes geschlossen werden. Bei einer schichtweisen Anordnung von szintillierendem und nicht-szintillierendem Material wie es in den Figuren 5, 6 und 8 beispielhaft dargestellt ist, ergibt sich eine Vorzugsebene parallel zu den Schichten.

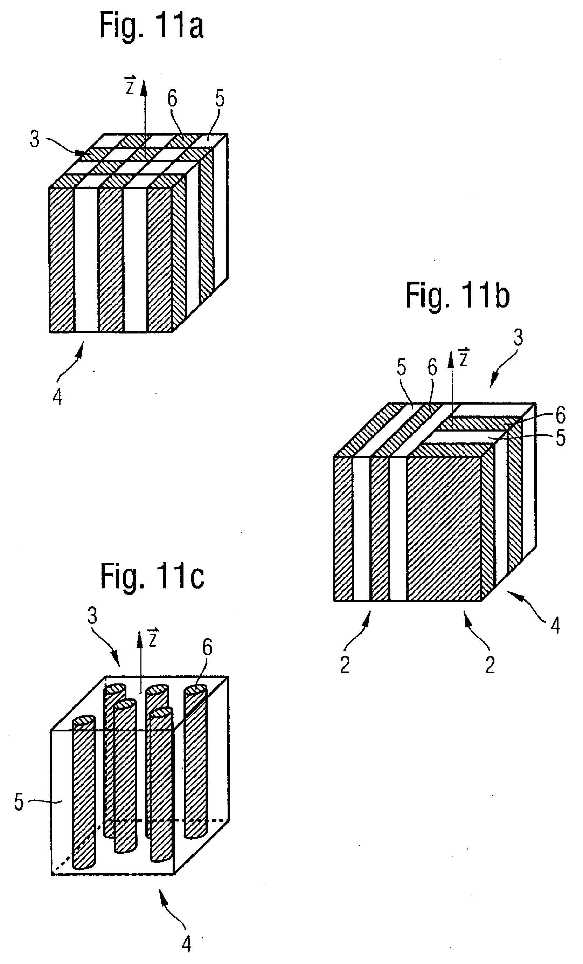

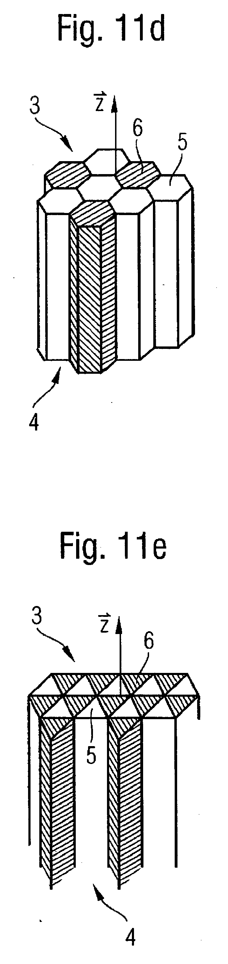

Durch Kombination zweier richtungsauflösender Detektorelemente aus Schichten, wobei die Vorzugsebenen der Detektorelemente senkrecht aufeinander montiert werden, kann durch die sich schneidenden Vorzugsebenen der beiden Detektorelemente eine Richtungsauflösung erzielt werden. In der Figur 11 sind Beispiele für mögliche alternative Anordnungen von Bereichen mit szintillierendem Detektormaterial und nicht-szintillierendem Detektormaterial dargestellt. Die schattierten Bereiche zeigen in dieser Figur Bereiche mit Szintillatormaterial oder aktivem Detektormaterial an.

Die Figur 11b zeigt beispielsweise zwei Detektorelemente 2, die senkrecht zueinander orientiert sind. Selbstverständlich ist es auch möglich, die Bereiche aus szintillierendem und nicht-szintillierendem Detektormaterial aus Polyedern aufzubauen. Beispielsweise zeigt die Figur 11a einen Block aus Quadern mit im Wesentlichen quadratischer Grundfläche, wobei Segmente aus Absorbermaterial oder nicht-szintillierendem Material 5 und szintillierendem Material 6 schachbrettartig angeordnet sind. Die Figuren 11d und 11e zeigen Detektorelemente, die ebenfalls aus Polyedern, in der Figur 11d mit sechseckiger Grundfläche und in der Figur 11e mit dreieckiger Grundfläche, aufgebaut sind. Denkbar ist auch, wie in der Figur 11c dargestellt ist, die Anordnung von zylinderförmigen Bereichen aus szintillierendem Material, deren Symmetrieachse parallel angeordnet sind, und die von einem nicht-szintillierendem Material umschlossen sind. In der Figur 11 ist die Vorzugsrichtung jeweils durch einen Vektor $\vec{z}$ angegeben.

Alternativ zu Bereichen mit szintillierendem Material und Absorber oder nicht-szintillierendem Material können auch für die szintillierenden Materialien Halbleitermaterialien verwendet werden, die als Halbleiterdetektor arbeiten. Dann können aus diesen jeweiligen aktiven Bereichen direkt Signale ausgelesen werden, welche die jeweilige deponierte Energie angeben.

In einem entsprechend abgewandelten Beispiel der erfindungsgemäßen Detektoranordnung weisen die ersten und zweiten Bereiche aktives Detektormaterial auf, wobei die beiden Bereiche jeweils getrennt auslesbar sind. Das Material der ersten Bereiche wirkt dann als Absorber für das Material der zweiten Bereiche und umgekehrt. Man kann in diesem Fall auch von zwei miteinander verzahnten Detektorelementen sprechen, wobei die aktiven Schichten (Bereiche mit aktivem Detektormaterial) der beiden Detektorelemente ineinander geschoben sind und wie Zähne ineinander greifen. Die Schichtdicken können dabei für die beiden Materialien gleich sein oder sich unterscheiden. Es sind auch chemisch gleiche oder unterschiedliche Materialzusammensetzungen möglich.

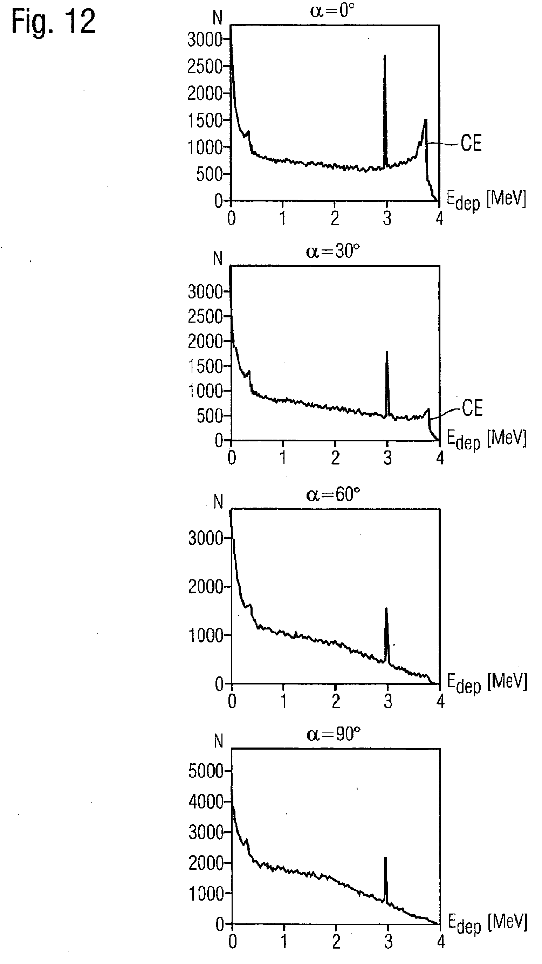

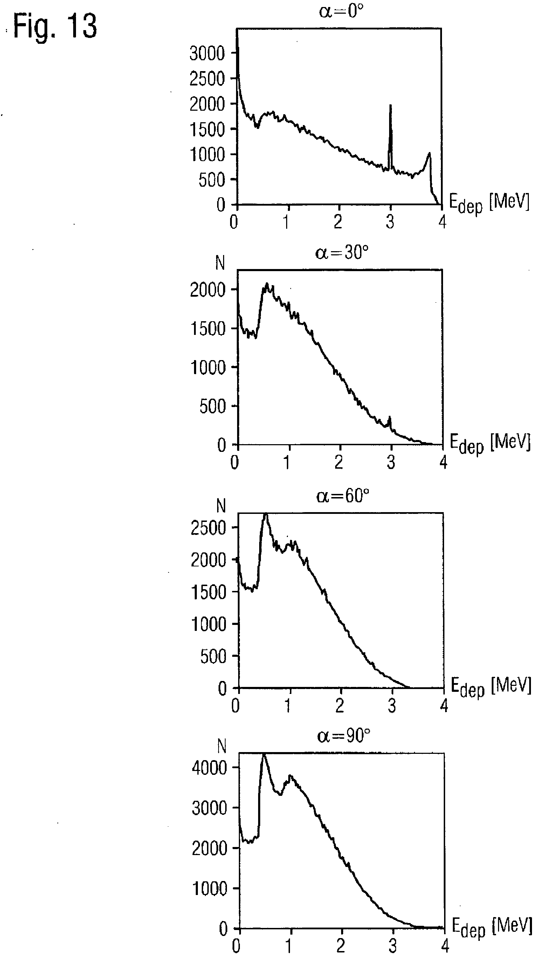

Die Figuren 12 und 13 zeigen Simulationsergebnisse der Anmelderin für ein schichtweise aufgebautes erfindungsgemäßes Detektorelement für verschiedene Schichtdicken $d_{SZ}$, $d_{nsz}$ und Einstrahlungswinkel $\alpha$ der Gammastrah-lung. Es werden dabei monoenergetische Photonenstrahlen mit einer Photonenenergie von 4 MeV angenommen. Das simulierte Detektorelement entspricht im Wesentlichen, der Ausführungsform wie es in der Figur 5 dargestellt ist, wobei jeweils ein Stapel quadratischer Platten der Abmessung 44 x 44 mm$^2$ aus einem organischen Szintillator Polyvinyltoluen für die Bereiche mit Szintillatormaterial und Eisen als Absorbermaterial angenommen wurde.

Die Figur 12 zeigt dabei Spektren von in dem jeweiligen Szintillatormaterial deponierter Energie für sechs Plattenpaare mit einer Dicke $d_{SZ}$ = 9,5 mm für die Segmente aus szintillierendem Material und einer Dicke von $d_{FE}$ = 1,6 mm für die Eisenplatten. Die Figur 13 zeigt Spektren für ein aus 24 Plattenpaaren zusammengestelltes Detektorelement, wobei $d_{SZ}$ = 2,4 und $d_{FE}$ = 0,4 mm betragen. Ein erfindungsgemäßes Detektorelement weist daher ein nur geringes Volumen von etwa 67 x 44 x 44 mm$^3$ auf und ist damit einfach handhabbar und vielseitig einsetzbar.

Für das Szintillatormaterial Polyvinyltoluen wurde eine Dichte von $\rho_{SZ}$ = 1,032 g/cm$^3$ und eine stöchometrische Zusammensetzung von $C_{10}H_{11}$ angenommen. Für Eisen ist eine Dichte von $\rho_{FE}$ = 7,874 g/cm$^3$, angenommen. Die Energieauflösung des Detektorelementes wurde als R = 0 angenommen. In den Figuren 12 und 13 sind Histogramme bzw. Verteilungen von Ereignissen in dem Detektorelement dargestellt, wobei insgesamt 10$^6$ Photonen nachgewiesen wurden. Der jeweilige Querschnitt des Detektorelementes wurde dabei gleichmäßig bestrahlt.

Bei der Konfiguration gemäß der Figur 12, also mit sechs Plattenpaaren, ist deutlich eine Compton-Kante CE bei Einfallswinkeln $\alpha$ = 0° und $\alpha$ = 30° zu erkennen. Mit zunehmendem Einfallswinkel $\alpha$ nimmt der Anteil von hochenergetischen Ereignissen im Spektrum ab. Eine stärkere Richtungsabhängigkeit in der Form des aufgenommenen Spektrums ist in der Figur 13 in der Konfiguration mit 24 Plattenpaaren erkennbar. Bei 24 Plattenpaaren und daher auch niedrigerer Plattendicke ist der Grenzwinkel $\alpha_{gr}$, bei dem sich die Spektralform deutlich ändert, kleiner als in der Konfiguration gemäß der Figur 12. Die bei etwa 3 MeV auftretenden Peaks entsprechen Double-Escape-Peaks der Paarerzeugung und treten 1,022 MeV unterhalb der Gamma-Energie auf.

Neben der Richtungsinformation ermöglicht die entsprechende Detektoranordnung die eingangs bezüglich der Figuren 1 - 4 erläuterte Bestimmung einer "Farbinformation", die zu einer Elementeanalyse des untersuchten Materials verwendet wird. Durch die schichtweise Ausführung des Detektorelementes ergibt sich bei nicht-frontaler Gammaeinstrahlung eine zu kleineren Signalen führende Farbverschiebung. Im Falle der Stickstoffdetektierung ist dies besonders vorteilhaft. Da für Stickstofflinien die Hochenergieanteile dominieren, hebt sich das Stickstoffsignal im gemessenen Spektrum besonders deutlich von den übrigen Elementen ab, wenn der Detektor mit seiner Vorzugsrichtung auf das Suchobjekt bzw. die Materialprobe zeigt.

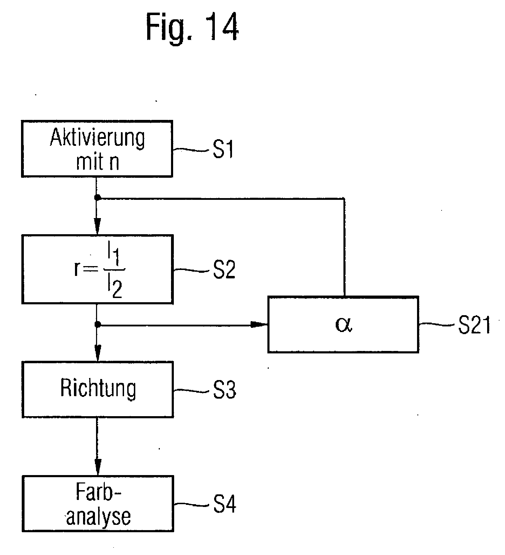

Bei einem Einsatz des erfindungsgemäßen Verfahrens und der Detektoranordnung zum Aufspüren von Landminen ergeben sich die folgenden in der Figur 14 dargestellten Verfahrensschritte. In einem ersten Schritt S1 wird mittels einer Neutronenquelle das zu untersuchende Material, beispielsweise ein Bodenbereich, mit Neutronen bestrahlt, was zu Kernreaktionen in dem Material führt. Unter einem eingestellten Winkel der Vorzugsrichtung des Detektorelementes bezüglich des zu untersuchenden Bodenbereichs wird die in dem Szintillatormaterial deponierte Energie aufgenommen und gemäß der Gleichungen 4 und 6 ein Richtungsparameter im Schritt S2 bestimmt. Dies erfolgt durch Schwenken des Detektorelementes unter mehreren veränderten Einstrahlungswinkeln $\alpha$ bzw. Schwenkwinkel (Schritt S21). Ein Maximum des Richtungsparameters r zeigt in der Regel an, dass die Vorzugsachse oder Richtung des Detektorelementes auf die Strahlungsquelle deutet. Somit wird zunächst eine Richtung erkannt (Schritt S3). Alternativ werden in den Schritten S2 und S21 die jeweiligen Hoch- und Niedrigenergieanteile der Spektren bei verschiedenen Schwenkwinkeln ermittelt. Ein Vorzugs-Schwenkwinkel, unter dem der Hochenergieanteil des zugehörigen Spektrums gegenüber den bei den anderen Schwenkwinkeln aufgenommenen Spektren ein Maximum zeigt, liefert die Richtung der Strahlungsquelle in Bezug auf das Detektorelement.

In der Folge wird eine Farbanalyse im Schritt S4 durchgeführt, d. h. es werden mindestens drei Energiebereiche ausgewählt und die darin vorliegenden deponierten Energien im Szintillatormaterial des Detektorelementes als Farbparameter F1, F2, F3 berechnet. Aus diesen drei erhaltenen Farbparametern F1, F2, F3 kann beispielsweise durch Vergleichen mit bekannten Farbparameterkombinationen das Vorliegen von stickstoffhaltigen Materialien, insbesondere Sprengstoff, erkannt werden.

Dieselbe Abfolge von Verfahrensschritten bietet sich bei der Untersuchung von Gepäck- oder Frachtgütern an.

Als Neutronenquelle kommen beispielsweise Deuterium-Tritium-Generatoren oder radioaktive Systeme in Frage. Bei Neutronen-Generatoren wird eine Reaktion von t(d,n) $^4$He ausgenutzt, die im  Wesentlichen eine isotrope Verteilung von Neutronen der Energie 1.4,4 MeV erzeugt. Für die Beschleunigung der Deuteronen werden allerdings Spannungen von 300 kV benötigt, die einen größeren Generator erfordern.

Als kompakte Neutronenquellen mit geringerer Quellstärke bieten sich Neutronenemitter wie $^{252}$Cf mit einer Halbwertszeit von 2,6 Jahren und einer Neutronenenergie von einigen MeV an. Es ist dabei auch die Verwendung von Americium-BerylliumPräparaten möglich, wobei zur Steigerung der Ausbeute Am und Be pulverförmig vermischt werden. Präparate dieser Form liefern ebenfalls eine gleichmäßige isotrope Verteilung des Neutronenflusses. Bei einem Transport einer derartigen Neutronenquelle sind jedoch schwere Absorber zur Abschirmung notwendig.

Deshalb kann für einen transportablen Gebrauch bei der Minensuche eine abschaltbare Neutronenquelle verwendet werden, bei der die Alpha-Quelle z. B. $^{241}$Am und Beryllium-Target getrennt bleibt. Bei einer großflächig als Folie ausgebildeten Alpha-Quelle steht ein Beryllium-Target in geringem Abstand gegenüber. Alphateilchen, die das Beryllium-Target treffen, produzieren dabei ein breites Neutronenspektrum um 2,5 MeV hauptsächlich in Vorwärtsrichtung. Durch Vergrößerung des Abstandes zwischen dem Alphastrahler und dem Beryllium-Target oder durch Einbringen eines Absorbers kann die Neutronenproduktion unterbrochen werden. Damit ist auch ein gefahrenloser Transport ohne aufwändige Neutronenabschirmung möglich.

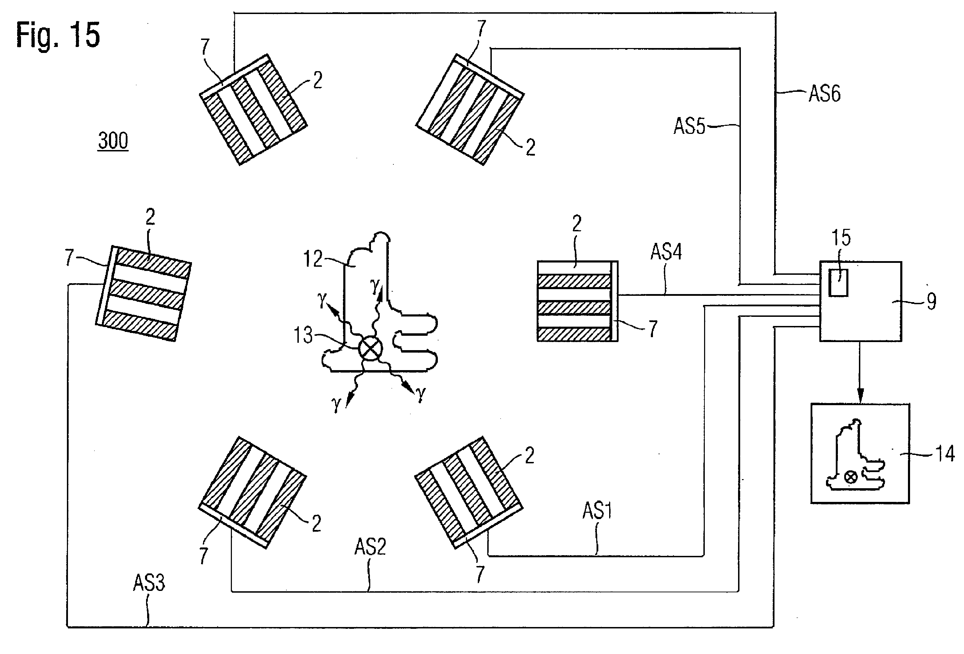

Eine erfindungsgemäße Detektoranordnung kann auch für tomographische Anwendungen eingesetzt werden. Die Figur 15 zeigt eine beispielhafte Detektoranordnung 300, bei der mehrere erfindungsgemäße Detektorelemente 2 vorgesehen sind, die um eine Materialprobe 12 angeordnet sind. Beispielsweise kann es sich bei der Materialprobe 12 um ein Gepäckstück oder ein  Frachtgut handeln, das eine lokalisierte Menge von Gamma strahlendem Material aufweist. Das Gamma strahlende Material als Gammastrahlungsquelle 13 kann beispielsweise durch Aktivierung einer Sprengstoffkapsel mit Neutronen erzeugt werden.

Die jeweiligen Detektorelemente bzw. die zugeordneten Photomultiplier 7 liefern jeweils Auswertesignale AS1-AS6 an eine elektronische Auswerteeinrichtung 9. Aus den verschiedenen Richtungsinformationen, die gemäß des erfindungsgemäßen Verfahrens ermittelt werden, kann die Position der GammaStrahlungsquelle 13 genau ermittelt werden. Eine Anzeigerichtung 14, die an die Auswerteeinrichtung 9 gekoppelt ist, liefert beispielsweise ein Bild der Gamma-Quelle, welche sich in der Materialprobe 12 aufhält.

Bei der Auswertung der Richtungsinformationen, die zumindest einen Winkel zwischen der jeweiligen Vorzugsrichtung der Detektorelemente 2 und der Strahlungsquelle 13 anzeigen, lassen sich mit üblichen bildgebenden Verfahren Abbildungen erstellen und anzeigen. Zusätzlich erfolgt die Bestimmung der Materialzusammensetzung durch das Ermitteln der Farbparameter und der Vergleich mit bekannten "Farbprofilen", die in einem Speicher 15 abgelegt sein können. Das erfindungsgemäße Verfahren und die Detektoranordndung kann damit hervorragend zur Materialuntersuchung eingesetzt werden.

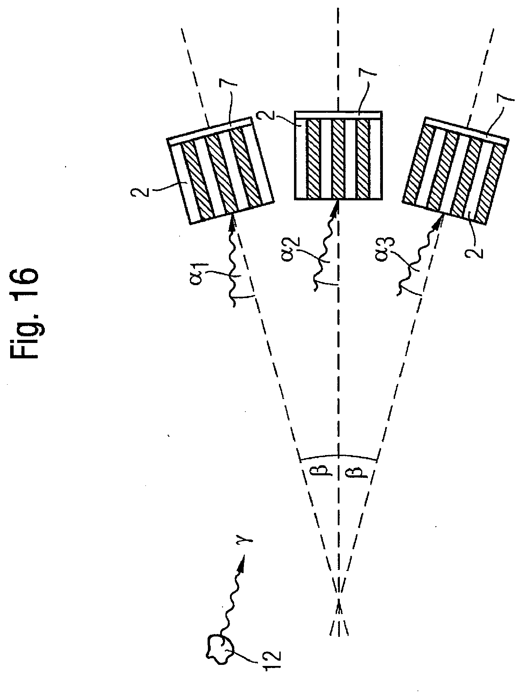

Die Figur 16 zeigt ein Weiterer Beispiel einer Detektoranordnung, bei der mehrere Detektorelemente 2 jeweils um einen Winkel $\beta$, der einem Schwenkwinkel äquivalent ist, gedreht angeordnet sind. Jedes Detektorelement 2 nimmt über den jeweiligen Photomultiplier 7 Spektren der Compton-Elektronen im aktiven Detektormaterial auf. Bezüglich einer Gamma-Quelle 12 ergeben sich für jedes Detektorelement 2 ein jeweiliger Einstrahlungswinkel $\alpha_1$, $\alpha_2$, $\alpha_3$ hinsichtlich

seiner Vorzugsrichtung, welche durch die gestrichelte Linie angegeben ist. Durch Vergleichen der unter verschiedenen Winkeln $\beta$ aufgenommenen im Detektormaterial deponierten Energien in den vorgegebenen Energiebereichen lässt sich die Richtung ermitteln, aus der die maximale hochenergetische Intensität kommt. Es werden also zum Beispiel die in einem ersten niedrigen Energiebereich deponierten Energien in den drei Detektorelementen gemessen und miteinander verglichen. Dann erfolgt ein ähnlicher Vergleich der deponierten Energien in einem zweiten, höheren Energiebereich. Die Gammastrahlungsquelle wird dann in der Vorzugsrichtung desjenigen Detektorelementes vermutet, für das der hochenergetische Anteil im aufgenommenen Spektrum am wenigsten zu niedrigeren Energien verschoben ist.

Die Erfindung ermöglicht somit einerseits die Bestimmung einer Materialprobenzusammensetzung und andererseits eine richtungsabhängige Detektion von hochgenetischen Photonen, wobei die Kollimation in dem jeweiligen Detektormaterial erfolgt. Durch die Vermeidung von passiven Absorberschichten wird eine höhere Effizienz erreicht, als bei externer Kollimation durch Kollimationsbohrungen. Der Aufbau eines Kollimators für die eintreffenden Gamma-Quanten vor dem eigentlichen Detektor mit aktiven Detektormaterialien entfällt somit. Erfindungsgemäß ist keinerlei Kollimator vor dem Detektorelement vorgesehen, der die Transmission der Detektoranordnung herabsetzen würde. Ein fester Kollimator könnte zudem nur für einen bestimmten Energiebereich optimiert werden, während der erfindungsgemäße Aufbau flexibel verwendbar ist. Anstelle einer herkömmlichen Kollimierung der einfallenden Gamma-Quanten erfolgt eine Detektor-interne Kollimation der durch beispielsweise und/oder Paarbildung in den Detektormaterialien produzierten Elektronen. Es ist dabei auch leichter, also über eine kürzere Strecke, die von den einfallenden Photonen produzierten Elektronen in dem jeweiligen Detektormaterial (Festkörper) abzubremsen.

Da keine Koinzidenzmessungen notwendig sind, ist zudem eine einfachere Signalverarbeitung möglich. In Kombination mit einer Neutronenquelle zur Anregung, insbesondere von stickstoffhaltigen Sprengstoffen, ist beispielsweise die Detektion von Landminen oder die Untersuchung von Gepäck- und Frachtstücken möglich.

Die erfindungsgemäße, der Farbanalyse ähnliche, Bestimmung einer Elementezusammensetzung der Materialprobe ist ebenso einfach möglich.

Die Herstellung der Detektorelemente kann mittels einfacher standardisierter Komponenten erfolgen. Die kleine Ausführungsform, insbesondere der Detektorelemente ohne externe Kollimationseinrichtungen ermöglicht den Einsatz als tragbare Einrichtungen sowie bei bildgebenden Anwendungen eine Auskleidung eines Detektionsraumes mit erfindungsgemäßen Detektorelementen.

Die in der Beschreibung genannten absoluten Energiebereiche lassen sich ebenfalls ändern ohne die Trajektorien und Energiepositionen der Compton-Elektronen grundlegend zu ändern.

Ferner ist es möglich, mehr als drei Energiebereiche vorzusehen und entsprechende weitere Farbparameter zu definieren. Somit würde ein "vieldimensionaler Farbenraum" geschaffen, in dem bestimmte Bereiche bekannten Materialzusammensetzungen oder Elementen in der Materialprobe zugeordnet sind. Die einzelnen Energiebereiche können sich dabei auch überschneiden.

Selbstverständlich kann die Erfindung neben den genannten Beispielen zur Minendetektion und Gepäckkontrolle oder Tomographieanwendungen vielfältig eingesetzt werden.

Bezugszeichenliste

| 1 | Detektoranordnung |
|---|---|
| 2 | Detektorelement |
| 3 | Vorderseite |
| 4 | Rückseite |
| 5 | erster Bereich |
| 6 | zweiter Bereich |
| 7 | Photomultiplier |
| 8 | Photokatode |
| 9 | Auswerteeinrichtung |
| 10 | Anzeigeeinrichtung |
| 11 | Neutronenquelle |
| 12 | Materialprobe |
| 13 | Gammastrahlungsquelle |
| 14 | Anzeigeeinrichtung |
| 15 | Speicher |
| AS1-AS6 | Auswertesignale |
| $\gamma$ | Gammastrahlung |
| S1-S4, S21 | Verfahrensschritte |

| CE | Compton-Kante |
| F1, F2, F3 | Farbparameter |
| $\alpha$ | Einfallswinkel |
| $\vec{z}$ | Richtungsvektor |
| PP | Photo-Peak |
| $S_{SZ}$ | Weglänge im Szintillator |
| $S_{NZ}$ | Weglänge im Absorber |
| T1-T6 | Trajektorie |
| $R_{CSDA}$ | Reichweite nach Continous Slowing Down Approximation |
| $d_{NSZ}$, $d_{SZ}$ | Dicke |
| $\alpha_{gr}$ | Grenzwinkel |

**Patentansprüche**

1. Verfahren zum Bestimmen der Materialzusammensetzung einer Strahlung abstrahlenden Materialprobe (12) mit den folgenden Verfahrensschritten:

a) Aufnehmen (P2) eines Spektrums der in einem Detektormaterial durch die Strahlung deponierten Energie mit einem das Detektormaterial aufweisenden Detektorelement (2);
b) Berechnung einer in einem ersten Energiebereich (0 bis E1) deponierten ersten Energie (F1) durch Integration der im ersten Energiebereich auftretenden Energieintensitäten (dN/dE), einer in einem zweiten Energiebereich (E1 bis E2) deponierten zweiten Energie (F2) durch Integration der im zweiten Energiebereich auftretenden Energieintensitäten (dN/dE), und einer in einem dritten Energiebereich (E2 bis E3) deponierten dritten Energie (F3) durch Integration der im dritten Energiebereich auftretenden Energieintensitäten (dN/dE), wobei die Energiebereiche unmittelbar aneinander angrenzen;
c) Zuordnen (P4) eines ersten Farbparameters (F1) zu der ersten deponierten Energie, eines zweiten Farbparameters (F2) zu der zweiten deponierten Energie und eines dritten Farbparameters (F3) zu der dritten deponierten Energie; und
d) Vektorielles vergleichen (P5) sämtlicher derart zugeordneten Farbparameter (F1, F2, F3) mit vorgegebenen Werten für diese Farbparameter (R1, R2, R3), wobei die vorgegebenen Werte (R1, R2, R3) typischen Farbparametern einer vorbestimmten Materialzusammensetzung entsprechen, **dadurch gekennzeichnet, dass**
e) in Abhängigkeit von den Farbparametern (F1, F2, F3) über das Vorliegen einer gesuchten Materialzusammensetzung in der Materialprobe (12) entschieden wird.

2. Verfahren nach Anspruch 1,
**dadurch gekennzeichnet,**
**dass** zum Zuordnen der Farbparameter (F1, F2, F3) ein Integral über die Intensität in dem jeweiligen Energiebereich eines Intensitätsspektrums der deponierten Energien berechnet wird.

3. Verfahren nach einem der Ansprüche 1 - 2,
**dadurch gekennzeichnet,**
**dass** einem gesuchten Material mindestens eine vorbestimmte Kombination von Farbparametern (F1, F2, F3) zugeordnet wird.

4. Verfahren nach mindestens einem der vorherigen Ansprüche,
**dadurch gekennzeichnet,**
**dass** in weiteren Energiebereichen deponierte weitere Energien bestimmt werden, und den weiteren Energien weitere Farbparameter zugeordnet werden.

5. Verfahren nach mindestens einem der vorherigen Ansprüche,
**dadurch gekennzeichnet,**
**dass** genau drei deponierte Energien und genau drei Farbparameter ermittelt werden.

6. Verfahren nach mindestens einem der vorherigen Ansprüche,
**dadurch gekennzeichnet,**
**dass** in einem dreidimensionalen Farbparameterraum Volumen festgelegt werden und falls ein ermittelter Vektor aus den drei Farbparametern in ein solches Volumen fällt, ein gesuchtes Material als erkannt gilt.

**7.** Verfahren nach mindestens einem der vorherigen Ansprüche,
**dadurch gekennzeichnet,**
**dass** die Strahlung mit einem ein Detektormaterial aufweisendes Detektorelement detektiert wird, und ein Abstand zwischen den Energiebereichen in Abhängigkeit von einer Energieauflösung (R(E)) des Detektorelementes (2) gewählt wird.

**8.** Verfahren nach mindestens einem der vorherigen Ansprüche,
**dadurch gekennzeichnet,**
**dass** das Spektrum durch Messen einer Verteilung von Ereignissen, bei denen in dem Detektormaterial Energie deponiert wird, in Abhängigkeit von der deponierten Energie aufgenommen wird.

**9.** Verfahren nach mindestens einem der vorherigen Ansprüche,
**dadurch gekennzeichnet,**
**dass** das Verfahren ferner einen Verfahrensschritt aufweist:

Einstrahlen (P1) von Neutronen auf eine Materialprobe (12) zur Aktivierung der Materialprobe (12).

**10.** Verfahren nach mindestens einem der vorherigen Ansprüche,
**dadurch gekennzeichnet,**
**dass** eine Detektoranordnung (1) zur winkelauflösenden Detektion von Strahlung mit mindestens einem Detektorelement (2), welches eine Vorderseite (3) und eine Rückseite (4) aufweist, verwendet wird, wobei:

- ein Raum zwischen der Vorderseite (3) und der Rückseite (4) des Detektorelementes (2) von mehreren Bereichen (6) aus einem ersten Detektormaterial und mindestens einem Bereich (5) aus einem zweiten Detektormaterial ausgefüllt ist und jeder Bereich die Vorderseite (3) mit der Rückseite (4) des Detektorelementes (2) verbindet; und
- wobei eine Energiedeposition in zumindest den Bereichen (6) aus dem ersten Detektormaterial in Abhängigkeit von einem Einstrahlungswinkel ($\alpha$) der Strahlung auf das Detektorelement (2) erfolgt; und

**dass** ein Vorzugs-Schwenkwinkel bestimmt wird, für den die in dem ersten und/oder zweiten Energiebereich deponierte Energie ein Maximum oder ein Minimum aufweist.

**11.** Detektoranordnung (1) zur Detektion Strahlung, welche von einer Materialprobe (12) abgegeben ist, mit:

a) mindestens einem Detektorelement (1), welches ein aktives Detektormaterial aufweist;
b) einer an das Detektorelement (1) gekoppelten Erfassungseinrichtung (8, 7), welche Signale von dem Detektorelement empfängt; und mit
c) einer Auswerteeinrichtung (9), welche in Abhängigkeit von den Signalen eine Verteilung der in dem Detektormaterialien deponierten Energien erfasst und ein Verfahren zum Bestimmen der Materialzusammensetzung nach mindestens einem der vorherigen Ansprüchen 1 - 10 durchführt.

**12.** Detektoranordnung (100) nach Anspruch 11,
**dadurch gekennzeichnet,**
**dass** die Erfassungseinrichtung als Lichtmesseinrichtung (7, 8) ausgeführt ist, welche integral Szintillationslicht des Detektormaterials als Signale erfasst.

**13.** Detektoranordnung (1) nach Anspruch 11 oder 12,
**dadurch gekennzeichnet,**
**dass** das aktive Detektormaterial einen Halbleiterdetektor ausbildet, wobei elektrische Signale auslesbar sind.

**14.** Detektoranordnung (1) nach mindestens einem der vorhergehenden Ansprüche 11 bis 13,
**dadurch gekennzeichnet,**
**dass** die Auswerteeinrichtung (9) einen Speicher (15) aufweist, in dem Wertekombinationen von Farbparametern vorliegen, welche bekannten Materialzusammensetzungen entsprechen.

**15.** Verwendung der Detektoranordnung (1, 100, 200, 300) nach mindestens einem der Ansprüche 11 bis 14, zum Erkennen von Sprengstoffen in zu untersuchenden Materialproben (12), insbesondere stickstoffhaltige Materialien, insbesondere bei Gepäckkontrollen, Frachtkontrollen und/oder der Räumung von Landminen.

**Claims**

1. Method for determining the material composition of a radiation-emitting material sample (12), with the following method steps:

   a) recording (P2) a spectrum of the energy deposited by the radiation in a detector material with a detector element (2) comprising the detector material;

   b) computation of a first energy (F1) deposited in a first energy range (0 to E1) by integration of the energy intensities (dN/dE) occurring in the first energy range, of a second energy (F2) deposited in a second energy range (E1 to E2) by integration of the energy intensities (dN/dE) occurring in the second energy range, and of a third energy (F3) deposited in a third energy range (E2 to E3) by integration of the energy intensities (dN/dE) occurring in the third energy range, where the energy ranges are immediately adjacent to one another;

   c) assignment (P4) of a first colour parameter (F1) to the first deposited energy, of a second colour parameter (F2) to the second deposited energy, and of a third colour parameter (F3) to the third deposited energy; and

   d) vectorial comparison (P5) of all the colour parameters (F1, F2, F3) assigned in this way with prespecified values for these colour parameters (R1, R2, R3), wherein the prespecified values (R1, R2, R3) correspond to typical colour parameters of a prespecified material composition, **characterised in that**

   e) a decision is made as to the presence of a sought material composition in the material sample (12) depending on the colour parameters (F1, F2, F3).

2. Method according to Claim 1,
   **characterised in that**
   in order to assign the colour parameters (F1, F2, F3), an integral is computed of the intensity of the deposited energies over the corresponding energy range of an intensity spectrum.

3. Method according to one of Claims 1 - 2,
   **characterised in that**
   at least one prespecified combination of colour parameters (F1, F2, F3) is assigned to a sought material.

4. Method according to at least one of the preceding claims,
   **characterised in that**
   further energies deposited in further energy ranges are determined, and further colour parameters are assigned to the further energies.

5. Method according to at least one of the preceding claims,
   **characterised in that**
   precisely three deposited energies and precisely three colour parameters are determined.

6. Method according to at least one of the preceding claims,
   **characterised in that**
   volumes are specified in a three-dimensional colour parameter space, and in the event that a vector that has been determined from the three colour parameters falls within such a volume, a sought material is considered to have been detected.

7. Method according to at least one of the preceding claims,
   **characterised in that**
   the radiation is detected with a detector element comprising a detector material, and a distance between the energy ranges is selected in accordance with an energy resolution (R(E)) of the detector element (2).

8. Method according to at least one of the preceding claims,
   **characterised in that**
   the spectrum is recorded depending on the energy deposited by measuring a distribution of events at which energy is deposited in the detector material.

9. Method according to at least one of the preceding claims,
   **characterised in that**
   the method has a further method step: irradiating (P1) a material sample (12) by neutrons to activate of the material sample (12).

**10.** Method according to at least one of the preceding claims, **characterised in that** a detector arrangement (1) is used for detection of radiation with angular resolution with at least one detector element (2) that has a front face (3) and a rear face (4), wherein:

- a space between the front face (3) and the rear face (4) of the detector element (2) is filled with a plurality of regions (6) of a first detector material and at least one region (5) of a second detector material, and each region connects the front face (3) to the rear face (4) of the detector element (2); and
- a deposition of energy in at least the regions (6) of the first detector material occurs depending on an angle of incidence ($\alpha$) of the radiation on the detector element (2); and that

a preferred pivoting angle is determined, for which the energy deposited in the first and/or second energy range exhibits a maximum or a minimum.

**11.** Detector arrangement (1) for the detection of radiation emitted by a material sample (12), with:

a) at least one detector element (1) that comprises an active detector material;
b) a recording apparatus (8, 7) coupled to the detector element (1) which receives signals from the detector element; and with
c) an evaluation apparatus (9) which, in accordance with the signals, captures a distribution of the energies deposited in the detector materials and executes a method for determining the material composition according to at least one of the preceding claims 1 - 10.

**12.** Detector arrangement (100) according to Claim 11, **characterised in that** the recording apparatus is implemented as a light measuring apparatus (7, 8) that integrally records the scintillation light of the detector material as signals.

**13.** Detector arrangement (1) according to Claim 11 or 12, **characterised in that** the active detector material forms a semiconductor detector, from which electrical signals can be read.

**14.** Detector arrangement (1) according to at least one of the preceding Claims 11 to 13, **characterised in that** the evaluation apparatus (9) comprises a memory (15) in which value combinations of colour parameters that correspond to known material compositions are stored.

**15.** Use of the detector arrangement (1, 100, 200, 300) according to at least one of Claims 11 to 14 for the detection of explosives in material samples (12) requiring inspection, in particular materials containing nitrogen, in particular at luggage checks, freight checks and/or the clearance of landmines.

**Revendications**

**1.** Procédé pour déterminer la composition d'un échantillon de matériau (12) émettant un rayonnement, comprenant les étapes suivantes :

a) enregistrement (P2) d'un spectre de l'énergie déposée par le rayonnement dans un matériau détecteur au moyen d'un élément détecteur (2) présentant le matériau détecteur ;
b) calcul d'une première énergie (F1) déposée dans une première région d'énergie (0 à E1) par intégration des intensités d'énergie (dN/dE) apparaissant dans la première région d'énergie, d'une deuxième énergie (F2) déposée dans une deuxième région d'énergie (E1 à E2) par intégration des intensités d'énergie (dN/dE) apparaissant dans la deuxième région d'énergie, et d'une troisième énergie (F3) déposée dans une troisième région d'énergie (E2 à E3) par intégration des intensités d'énergie (dN/dE) apparaissant dans la troisième région d'énergie, sachant que les région d'énergie sont directement voisines ;
c) attribution (P4) d'un premier paramètre chromatique (F1) à la première énergie déposée, d'un deuxième paramètre chromatique (F2) à la deuxième énergie déposée et d'un troisième paramètre chromatique (F3) à la troisième énergie déposée ; et

d) comparaison vectorielle (P5) de la totalité des paramètres chromatiques (F1, F2, F3) ainsi attribués avec des valeurs prédéfinies (R1, R2, R3) pour ces paramètres chromatiques, sachant que les valeurs prédéfinies (R1, R2, R3) correspondent à des paramètres chromatiques typiques d'une composition de matériau prédéterminée, **caractérisé en ce que**

e) la présence d'un matériau recherché dans l'échantillon de matériau (12) est prononcée en fonction des paramètres chromatiques (F1, F2, F3).

**2.** Procédé selon la revendication 1,
**caractérisé en ce**
**que** pour attribuer les paramètres chromatiques (F1, F2, F3) est calculée une intégrale sur l'intensité des énergies déposées dans chaque région d'énergie d'un spectre d'intensités.

**3.** Procédé selon l'une des revendications 1 à 2,
**caractérisé en ce**
**qu'**au moins une combinaison prédéfinie de paramètres chromatiques (F1, F2, F3) est attribuée à un matériau recherché.

**4.** Procédé selon au moins une des revendications précédentes,
**caractérisé en ce**
**que** sont déterminées d'autres énergies déposées dans d'autres régions d'énergie et que d'autres paramètres chromatiques sont attribués aux autres énergies.

**5.** Procédé selon au moins une des revendications précédentes,
**caractérisé en ce**
**qu'**exactement trois énergies déposées et exactement trois paramètres chromatiques sont déterminés.

**6.** Procédé selon au moins une des revendications précédentes,
**caractérisé en ce**
**que** dans un espace tridimensionnel de paramètres chromatiques sont définis des volumes et, dans le cas où un vecteur déterminé à partir des trois paramètres chromatiques s'inscrit dans un tel volume, un matériau recherché est considéré comme identifié.

**7.** Procédé selon au moins une des revendications précédentes,
**caractérisé en ce**
**que** le rayonnement est détecté avec un élément détecteur présentant un matériau détecteur, et qu'une distance entre les régions d'énergie est sélectionnée en fonction d'une résolution en énergie (R(E)) de l'élément détecteur (2).

**8.** Procédé selon au moins une des revendications précédentes,
**caractérisé en ce**
**que** le spectre est enregistré en fonction de l'énergie déposée par mesure d'une distribution d'événements au cours desquels de l'énergie est déposée dans le matériau détecteur.

**9.** Procédé selon au moins une des revendications précédentes,
**caractérisé en ce**
**que** le procédé comprend de plus une étape : irradiation (P1) d'un échantillon de matériau (12) par des neutrons pour activer l'échantillon de matériau (12).

**10.** Procédé selon au moins une des revendications précédentes,
**caractérisé en ce**
**qu'**est utilisé un arrangement détecteur (1) pour détecter un rayonnement par résolution angulaire, comprenant au moins un élément détecteur (2) présentant une face avant (3) et une face arrière (4), sachant :

- **qu'**un espace entre la face avant (3) et la face arrière (4) de l'élément détecteur (2) est rempli par plusieurs zones (6) constituées d'un premier matériau détecteur et au moins une zone (5) constituée d'un second matériau détecteur, et que chaque zone relie la face avant (3) à la face arrière (4) de l'élément détecteur (2) ; et sachant
- **qu'**un dépôt d'énergie dans au moins des zones (6) constituées du premier matériau détecteur a lieu en fonction d'un angle d'incidence ($\alpha$) du rayonnement sur l'élément détecteur (2) ; et en ce

**qu'**est déterminé un angle de pivotement préférentiel pour lequel l'énergie déposée dans la première et/ou la deuxième région (s) d'énergie présente un maximum ou un minimum.

11. Arrangement détecteur (1) pour détecter un rayonnement émis par un échantillon de matériau (12), comprenant :

   a) au moins un élément détecteur (1) présentant un matériau détecteur actif ;
   b) un dispositif enregistreur (8, 7) qui est couplé à l'élément détecteur (1) recevant des signaux de l'élément détecteur ; et
   c) un dispositif d'analyse (9) qui enregistre en fonction des signaux une distribution des énergies déposées dans le matériau détecteur et réalise un procédé pour déterminer la composition de matériaux selon au moins une des revendications 1 à 10 précédentes.

12. Arrangement détecteur (100) selon la revendication 11,
   **caractérisé en ce**
   **que** le dispositif enregistreur est conçu en tant que dispositif photométrique (7, 8) qui enregistre intégralement sous forme de signaux la lumière de scintillation du matériau détecteur.

13. Arrangement détecteur (1) selon la revendication 11 ou 12,
   **caractérisé en ce**
   **que** le matériau détecteur actif forme un détecteur semiconducteur, dont les signaux électriques sont exploitables.

14. Arrangement détecteur (1) selon au moins une des revendications 11 à 13 précédentes,
   **caractérisé en ce**
   **que** le dispositif d'analyse (9) présente une mémoire (15) dans laquelle sont stockées des combinaisons de valeurs de paramètres chromatiques qui correspondent à des compositions de matériaux connues.

15. Mise en oeuvre de l'arrangement détecteur (1, 100, 200, 300) selon au moins une des revendications 11 à 14, afin de déceler des explosifs dans des échantillons de matériaux (12) à analyser, en particulier des matériaux azotés, notamment lors de contrôles de bagages, de contrôles de marchandises à transporter et/ou du déminage de mines terrestres.

# Fig. 1

EP 2 047 298 B1

Fig. 2a

Fig. 2b

Fig. 2c

**Fig. 2d**

**Fig. 2e**

**Fig. 2f**

# Fig. 3

# Fig. 4

# Fig. 5

EP 2 047 298 B1

# Fig. 6

EP 2 047 298 B1

# Fig. 7a

# Fig. 7b

# Fig. 8

# Fig. 9

# Fig. 10

## Fig. 11a

## Fig. 11b

## Fig. 11c

## Fig. 11d

## Fig. 11e

Fig. 12

**Fig. 13**

## Fig. 14

Fig. 15

# Fig. 16

EP 2 047 298 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050195931 A

**In der Beschreibung aufgeführte Nicht-Patentliteratur**

- **G. NEBBIA ; J. GERL.** Detection of buried landmines and hidden explosives using neutron, X-ray and gamma-ray probes. *europhysics news,* Juli 2005, 119 ff